# EUROPÄISCHE PATENTSCHRIFT

(11) **EP 3 265 513 B1**
(45) Veröffentlichungstag und Bekanntmachung des Hinweises auf die Patenterteilung: **08.05.2019**
(21) Anmeldenummer: 15706848.7
(22) Anmeldetag: 02.03.2015
(51) Int. Cl.: C08L 23/06, C08L 53/00, B65D 41/12, B65D 53/00, B65D 53/02

(54) **GEFÄSSVERSCHLUSS AUS METALL ODER KUNSTSTOFF**
CONTAINER CLOSURE MADE OF METAL OR PLASTIC
DISPOSITIF DE FERMETURE DE RÉCIPIENT EN MÉTAL OU EN MATIÈRE PLASTIQUE

(43) Veröffentlichungstag der Anmeldung: 10.01.2018
(73) Patentinhaber: Actega DS GmbH, 28219 Bremen (DE)
(72) Erfinder: KERN, Matthias, 28865 Lilienthal (DE); HEYDER, Simon, 27777 Ganderkesee (DE)
(74) Vertreter: Maiwald, Walter
(86) Internationale Anmeldenummer: PCT/EP2015/054314
(87) Internationale Veröffentlichungsnummer: WO 2016/138930

(56) Entgegenhaltungen:
- EP-A1- 0 853 096
- WO-A1-00/75224
- WO-A1-2015/010718
- US-A1- 2006 229 402

## Beschreibung

Die Erfindung betrifft generell Gefäßverschlüsse mit einer Dichtungseinlage auf Polymerbasis für Flaschen und andere Gefäße zur Aufnahme von Getränken und Nahrungsmitteln. Spezieller betrifft die Erfindung Gefäßverschlüsse, die mit einer Dichtungseinlage versehen sind, die wenigstens ein Barrierepolymer enthält. Die Gefäßverschlüsse sind frei von halogenhaltigen Stoffen und eignen sich auch für anspruchsvolle Verwendungen, insbesondere bei Wein-, Sekt- und Champagnerflaschen sowie bei Kronkorken mit verringerter Blechdicke.

Getränke und Nahrungsmittel werden zum Transport und zur Lagerung bzw. Aufbewahrung in verschiedene Arten von Gefäßen abgefüllt. Oft müssen diese Gefäße verschließbar sein, damit der Inhalt nicht ausläuft und zudem vor dem Zutritt unerwünschter Stoffe geschützt ist, die den Inhalt verunreinigen oder beschädigen würden. In vielen Anwendungsfällen handelt es sich dabei nicht nur um feste oder flüssige Verunreinigungen. Wenn der Inhalt empfindlich gegenüber gasförmigen Stoffen ist, müssen auch diese am Zutritt gehindert werden. Dies wird durch einen entsprechend ausgestalteten Gefäßverschluss bewirkt.

Gefäßverschlüsse aus Metall und/oder Kunststoff sind seit langem bekannt. Sie dienen in Form von beispielsweise Schraubkappen, Drehverschlüssen und Kronkorken zum dichten Verschluss von Gefäßen wie etwa Flaschen, Gläser und dgl. Solche Gefäße haben eine Mündung, die vom Gefäßverschluss verschlossen werden muss. Dabei muss ein ausreichend dichter Verschluss des Gefäßes gewährleistet sein, um einerseits das Auslaufen des Gefäßinhalts zu verhindern und andererseits den Gefäßinhalt vor dem Eintritt unerwünschter Stoffe, einschließlich gasförmiger Substanzen wie Sauerstoff, Trichloranisol und dergleichen, zu schützen.

Die nötige Dichtigkeit wird üblicherweise durch eine Dichtungseinlage erreicht, die aus einem einerseits ausreichend festen, andererseits aber auch elastischen Material besteht und im Gefäßverschluss so angeordnet ist, dass sie die Mündung des Gefäßes kontaktiert, wenn der Gefäßverschluss am Gefäß angeordnet ist. Meist ist die Dichtungseinlage scheibenförmig oder ringförmig an der Innenseite des Gefäßverschlusses angeordnet. Im verschlossenen Zustand des Gefäßes liegt sie an der Gefäßmündung an und wird vom Gefäßverschluss gegen die Mündung gepresst, wobei ihre Härte zusammen mit ihrer Elastizität die Dichtung bewirkt. Eine gute Dichtungseinlage gleicht dabei die stets vorhandenen Unebenheiten der Gefäßmündung aus. An die Dichtungseinlage werden daher umso höhere Anforderungen gestellt, je unebener die Gefäßmündung ist.

Ein wesentlicher Faktor bei der Erfüllung solcher Anforderungen ist die geeignete Wahl des Materials der Dichtungseinlage. Viele bekannte Materialien eignen sich gut für relativ einfache Anwendungen, aber weniger oder gar nicht für anspruchsvollere Dichtungen.

Die Dichtungseinlage muss dabei auch weiteren Anforderungen genügen, so soll sie für viele Einsatzzwecke pasteurisierbar oder sogar sterilisierbar sein. Sie soll (z. B. bei kohlensäurehaltigen Getränken) einem erheblichen Innendruck standhalten, bei dessen Überschreiten aber kontrolliert nachgeben (Überdruck-Ventilwirkung).

Handelt es sich bei dem Gefäßverschluss um einen Drehverschluß, darf die Dichtungseinlage dem Verdrehen des Gefäßverschlusses auf der Mündung beim Öffnen keinen zu großen Widerstand entgegensetzen.

Zudem muss sich die Dichtungseinlage möglichst unaufwändig herstellen und im Gefäßverschluss anbringen lassen. Es ist bekannt, scheibenförmige Dichtungseinlagen aus Bahnen oder Filmen auszuschneiden und dann im Gefäßverschluss zu befestigen ("Out-shell molding") oder, was oft bevorzugt wird, in fließfähiger Form in den Gefäßverschluss einzutragen, dort auszuformen und zu verfestigen ("In-shell molding"). Das In-shell molding gestattet es auch, Dichtungseinlagen zu erzeugen, die nicht scheiben-, sondern ringförmig sind.

Bei Dichtungseinlagen auf Polymerbasis geschieht dies herkömmlich durch Eintrag als Plastisol mit nachfolgender Formung und Trocknung, oder bei thermoplastischen Materialien durch Eintrag in erwärmtem fließfähigen Zustand, nachfolgende Formung und Abkühlung.

Während früher PVC-haltige Dichtungseinlagen in großem Umfang verwendet wurden, begegnen PVC und andere halogenhaltige Materialien heute erheblichen Bedenken. Sie werden als potentiell gesundheitsschädlich angesehen und sind auch nicht problemlos zu entsorgen. In vielen Ländern ist der Einsatz solcher halogenhaltigen Materialien durch Gesetze oder Vorschriften reglementiert oder sogar verboten.

Es besteht daher ein erheblicher Bedarf an Gefäßverschlüssen, die ohne halogenhaltige Materialien auskommen, ohne dabei auf die Vorteile verzichten zu müssen, die z. B. PVC-haltige Dichtungseinlagen hinsichtlich Verarbeitung, Dichtungseigenschaften, Kosten und dgl. haben.

Hierfür gibt es im Stand der Technik bereits eine Vielzahl von Vorschlägen.

So ist es seit Jahrzehnten bekannt, Dichtungseinlagen (sowohl für Drehverschlüsse als auch für abzuhebelnde Verschlüsse wie etwa Kronkorken) auf der Basis von Polymeren herzustellen, die keine Halogene enthalten. Bei diesen Dichtungseinlagen handelt es sich durchweg um "Compounds", also Gemische von einem oder (meist) mehreren Polymeren mit Zusatzstoffen, die die Eigenschaften der Dichtungseinlage an den vorgesehenen Einsatzzweck anpassen, ihre Verarbeitung oder Benutzung erleichtern und dgl.

Typische Polymere in solchen Compounds sind Thermoplaste, vor allem Polyolefine, thermoplastische Elastomere, elastische Thermoplasten und synthetische Kautschuke. Typische Zusatzstoffe sind Weichmacher, Öle, Gleitmittel, Antioxidantien, Stabilisatoren, Pigmente, Füllstoffe und dgl.

Dichtungseinlagen auf Polymerbasis sind je nach Wahl ihrer Bestandteile unterschiedlich durchlässig für Fremdstoffe. Solche Fremdstoffe können beispielsweise zwischen der Dichtungseinlage und der Gefäßmündung durchtreten, wenn die Dichtungseinlage nicht optimal an der Mündung anliegt. Sie können auch im Material der Dichtungseinlage lösbar sein und in das Gefäß eindiffundieren. Die Dichtungseinlage muss daher hinsichtlich ihrer mechanischen Eigenschaften (insbesondere Härte und Elastizität) und ihrer chemischen Eigenschaften (Löslichkeit von Fremdstoffen) optimiert sein.

Um den Zutritt von gasförmigen Stoffen zu verringern oder sogar zu verhindern, ist es bereits bekannt, die intrinsischen Barriereeigenschaften bestimmter Polymere zu nutzen. Polymere unterscheiden sich hinsichtlich ihrer spezifischen Durchlässigkeit für Sauerstoff (und andere Stoffe wie etwa Trichloranisol). Bei einigen ist diese Durchlässigkeit besonders gering, und diese werden im Stand der Technik oft als "Barrierepolymere" bezeichnet. (Im Kontext dieser Erfindung werden solche Polymere als "Barrierepolymere" bezeichnet, die der im Folgenden noch gegebenen Definition entsprechen.) Beispiele solcher Barrierepolymere sind Materialien wie Isobuten-isopren Copolymer (PIBI), auch als Butylkautschuk (IIR) bekannt; Styrol-Isopren-Butadien-Styrol Block-Copolymer; Polybuten (PB); Polyisobutylen (PIB) und andere, die im Folgenden noch benannt werden ("-buten" und "-butylen" sind synonym). Für halogenfreie Gefäßverschlüsse auf Basis von Barrierepolymeren sind in der Patentliteratur bereits Vorschläge gemacht worden, so etwa in CA 24 36 170; EP 754 743; EP 1 606 101; EP 1 816 086; US 2004 0161 560 und WO 2011 094 094. Um die mechanischen Eigenschaften bei gegebener chemischer Eignung anzupassen, werden solche Polymere im Compound mit anderen Substanzen kombiniert, die eine geeignete Härte und Elastizität des Compounds gewährleisten. Bekannte Compounds erfüllen diese Aufgabe jedenfalls bei weniger problematischen Anforderungen.

Aus EP 1 409 584 sind Compounds bekannt, die Styrol-Ethylen-Butylen-Styrol (SEBS), PIB-Öl und Polypropylen umfassen. Dem Gehalt an PIB-Öl wird ein Beitrag zur Barrierewirkung zugeschrieben. Jedoch zeigt eine Versuchsreihe mit variierenden Gehalten an PIB-Öl, dass ausschließlich der PP-Gehalt für die Barrierewirkung verantwortlich ist; der PIB-Gehalt ist ohne positiven Einfluss. Insgesamt ist die Barrierewirkung dieser Compounds gering und liegt deutlich außerhalb der erfindungsgemäßen Bereiche, die im Folgenden näher definiert werden.

Es ist auch bereits bekannt, dem Material einer Dichtungseinlage eine oder mehrere Substanzen zuzusetzen, die eindringenden Sauerstoff chemisch binden und so "wegfangen" - daher auch als "Scavenger" bezeichnet. Ein Beispiel hierfür ist Natriumsulfit, das in Form fester Partikel mit geeigneter Teilchengröße in die Dichtungseinlage eingearbeitet wird.

Bedarf besteht aber immer noch an Dichtungseinlagen ohne halogenhaltige Materialien, die eine verbesserte Dichtwirkung gerade bei problematischen und anspruchsvollen Anwendungen ermöglichen, insbesondere bei den nachstehend beispielhaft näher erläuterten Anwendungen:
Wenn der Inhalt bestimmungsgemäß über lange Zeiträume im Gefäß bleiben soll, ist ein wirksamer Verschluss besonders wichtig. Ein bekanntes Beispiel ist Wein (für ähnliche Getränke wie Sekt, Prosecco, Champagner und dgl. gilt das gleiche), der traditionell in Glasflaschen abgefüllt wird und bis zum Verzehr in diesen verbleibt. Zwischen der Abfüllung und dem Verzehr können Jahre oder, besonders bei hochwertigen Weinen, sogar Jahrzehnte liegen.

Weinflaschen sind relativ einfache und billige Produkte mit erheblichen Fertigungstoleranzen, relativ unebenen Mündungen und oft auch Haarrissen im Mündungsbereich. Das macht einen wirksamen Verschluss schwierig. Beim traditionellen Verschluss mit in den Flaschenhals eingepressten Naturkorken (aus der Rinde der Korkeiche) werden solche Probleme in gewissem Umfang gelöst, weil der elastische Korken die üblichen Bemessungstoleranzen ausgleichen kann und Mängel im Mündungsbereich meist ohne Einfluss bleiben. Daher ist der Verschluss zwar meist über einen gewissen Zeitraum ausreichend, dennoch ist er nicht völlig dicht und der Wein "altert" in der Flasche unter der Einwirkung von Sauerstoff, der aus der Luft langsam in die Flasche eindringt. Das kann erwünscht sein, muss aber auch dann kontrolliert erfolgen, weil der Wein sonst die vorgesehene "Lebensdauer" nicht erreicht.

Bei Naturkorken gibt es nicht nur eine erhebliche Variation der individuellen Qualität in den Abmessungen, der Elastizität und der Porosität. Naturkorken sind auch anfällig für degenerative Prozesse wie Korkfäule, die zu Geschmacksveränderungen und sogar zum mechanischen Versagen des Verschlusses während der Lagerung führen können, so dass der Wein beschädigt oder sogar ungenießbar wird, und eventuell ausläuft.

Es gibt bereits verbesserte Verschlüsse, beispielsweise mit äußerer Beschichtung von Naturkorken mit Polymer-Materialien oder mit insgesamt aus Kunststoff hergestellten Flaschenkorken, aber besonders im Bereich hochwertiger Weine werden solche Verschlüsse vom Verbraucher nicht bedenkenlos akzeptiert. Weinflaschen können stattdessen mit Verschlüssen aus Glas (mit einem außen kunststoffbeschichteten Glasstopfen) versehen werden, was die Akzeptanz beim Verbraucher verbessert, aber relativ teuer ist.

Die Weinhersteller verwenden daher seit längerem als Alternative zu den oben behandelten Verschlüssen auch Schraubkappen - im einfachsten Fall und besonders für relativ preisgünstige Weine mit kurzer Lagerungsdauer sind das Schraubkappen aus Metall oder Kunststoff, die auch für in Flaschen abgefüllte Getränke wie Wasser, Säfte und dergleichen verwendet werden. Für diese Anwendungen muss die Weinflasche außenseitige Gewinde-Elemente im Mündungsbereich aufweisen, damit die Schraubkappe aufgeschraubt werden kann. Im Unterschied zu Korken und anderen Stopfen wird die Dichtungsfunktion dabei in den Mündungsbereich der Flasche verlagert.

Allerdings sind auch Weinflaschen mit Schraubverschluss typische Massenprodukte, mit Mündungen, die qualitativ denen traditioneller Weinflaschen nicht relevant überlegen sind. Auch hier sind die Mündungen uneben und ungleichförmig. Viele Schraubverschluss-Weinflaschen haben Haarrisse im Mündungsbereich. Eine herkömmliche Dichtungseinlage (beispielsweise einer Aluminium-Schraubkappe für Mineralwasser oder Saft) kann das selbst bei kurzer Lagerung nicht immer ausgleichen, so dass es zum Auslaufen des Weins kommen kann. Auch wenn die Menge des durch solche Haarrisse austretenden Weins gering ist, verringert das die Haltbarkeit des Weins und die Akzeptanz des Produkts.

Für höherwertige Weine mit eventuell Jahrzehnte dauernder Lagerung sind solche herkömmlichen Drehverschlüsse generell ungeeignet. Dies nicht nur wegen der Gefahr von "Ausläufern", sondern auch und besonders, weil die Dichtungseinlage den Wein über so lange Zeiträume nicht wirksam vor dem Eindringen von Sauerstoff (und ggf. anderer gasförmiger Verunreinigungen) schützen kann. Ohne an eine theoretische Erklärung gebunden sein zu wollen, wird angenommen, dass die bekannten Dichtungseinlagen nicht weich genug sind, um auch Haarrisse abzudichten. Es erscheint nicht möglich, solche bekannten Compounds durch die grundsätzlich bekannten Maßnahmen (Zusatz weichmachender Polymere oder anderer Weichmacher) zu optimieren, ohne dabei die anderen erforderlichen Eigenschaften (Elastizität, Barrierewirkung, keine Geschmacksbeeinträchtigung usw.) zu kompromittieren.

In neuerer Zeit ist für dieses Problem eine Lösung auf den Markt gekommen, die eine gewisse Verbesserung gebracht hat. Unter Bezeichnungen wie "Saranex" und "Zinn-Saran" sind Gefäßverschlüsse für Weinflaschen mit Drehverschluss im Handel, die eine deutlich verbesserte Barrierewirkung zeigen. Saranex-Verschlüsse haben eine scheibenförmige Dichtungseinlage mit einem Mehrschichtenaufbau aus geschäumtem Polyethylen (PE) und Polyvinylidenchlorid ("Saran"). Bei Zinn-Saran tritt eine Metallfolien-Kaschierung hinzu. Die Scheiben werden aus dem koextrudierten Material ausgestanzt und in den Gefäßverschluss so eingelegt, dass das geschäumte PE der Flaschenmündung zugewandt ist. Polyvinylidenchlorid ist ein sehr wirksames Barrierepolymer und die Schaumstruktur bewirkt durch ihre Elastizität eine gute Dichtigkeit im Berührungsbereich zwischen der Mündung und der Dichtungseinlage.

Eine zusammenfassende Betrachtung findet sich bei H. J. Köhler et al., "Untersuchung zum Abdichtungsverhalten von Longcap-Verschlüssen", Der Deutsche Weinbau Nr. 03/2010.

Ein wesentlicher Nachteil dieser bekannten Lösung liegt darin, dass Polyvinylidenchlorid ein halogenhaltiges Polymer ist.

Zudem sind diese Materialien nur eingeschränkt tiefziehfähig. Die Dichtungseinlage ist eine "glatte" ebene Scheibe, die trotz der (begrenzten) Anpassung an die Mündung, an der die Schaumstruktur mitwirkt, die Mündung nicht immer völlig dichten kann. Bei nicht optimalen Flaschen, besonders bei solchen mit Haarrissen im Mündungsbereich der Flasche, kommt es zu Ausläufern, d. h. Wein tritt durch die Risse aus - besonders bei der üblichen liegenden Lagerung der Flaschen. Der Herstellungsprozess lässt es nicht zu, dem durch eine Profilierung der Dichtungseinlage entgegenzuwirken.

Die Notwendigkeit, die Dichtungsscheiben auszustanzen und dann in den Gefäßverschluss einzulegen, führt außerdem zu Mehraufwand im Vergleich zu Dichtungseinlagen, die mittels in-shell molding erzeugt werden können, und erhöht das Risiko, dass die vorgefertigten Scheiben beim Einlegen beschädigt werden. Wenn die Passung der Dichtungsscheibe im Gefäßverschluss nicht perfekt ist, leidet die Dichtigkeit und es kommt vermehrt zu Ausläufern. Die Druckfestigkeit der Dichtungseinlage ist eingeschränkt.

Es kann zudem zu geschmacklichen Beeinträchtigungen kommen, die durch das Material der Dichtungseinlage ausgelöst werden.

Außerdem sind diese Dichtungssysteme relativ teuer.

Es besteht danach ein Bedürfnis nach weiteren Verbesserungen speziell für die oben diskutierten Anwendungen bei Wein und dgl.

Ein verwandtes Problem, dass sich mittels der Erfindung ebenfalls lösen lässt, ergibt sich bei abhebelbaren Gefäßverschlüssen, insbesondere bei Kronkorken.

Auch hier sind die üblichen Gefäße, typischerweise Bierflaschen und Flaschen für kohlensäurehaltige Softdrinks und Mineralwasser, Massenprodukte mit schwankender Qualität des Mündungsbereichs hinsichtlich Unebenheiten, Haarrissen und dgl.

Getränke wie Bier, Softdrinks und Mineralwasser sind empfindlich für Geschmacksveränderungen, die ggf. durch Oxidation nach Sauerstoff-Eintritt, und/oder durch das Eindringen geschmacksverändernder Substanzen wie Trichloranisol bewirkt werden.

Die Lagerungszeiten sind jedoch meist kurz. Es gibt im Stand der Technik Dichtungseinlagen, die bei herkömmlichen Kronkorken eine ausreichende Dichtung gewährleisten.

Ein Problem ergibt sich neuerlich aus dem Bedürfnis der Hersteller, zu dünneren und damit mechanisch schwächeren Blechen für solche Kronkorken überzugehen. Während herkömmliche Kronkorken in Europa eine Blechstärke von 0.23 mm aufweisen, möchte man mit Blechstärken von 0.20 mm und darunter, bis zu 0.17 mm arbeiten, um Material zu sparen.

Ein Kronkorken-Körper aus dünnerem Blech kann jedoch die darin angebrachte Dichtungseinlage nicht zuverlässig mit der gleichen Kraft gegen die Gefäßmündung pressen wie ein herkömmlicher Körper aus stärkerem Blech. Die Dichtungseinlage muss, hauptsächlich durch ein optimiertes Verhältnis von Härte und Elastizität, die Dichtung auch bei solchen Situationen gewährleisten. Sie muss dazu weicher eingestellt werden, darf aber ihre Elastizität nicht verlieren.

Auch hier besteht also ein Bedürfnis nach verbesserten Gefäßverschlüssen. Für diese Anwendung muss die Dichtungseinlage allerdings nicht ganz so weich sein wie bei dem oben beschriebenen Einsatz bei Weinflaschen-Verschlüssen.

Die Erfindung setzt es sich zum Ziel, verbesserte Verschlüsse zu schaffen, die sich nicht nur generell, sondern auch für die hier diskutierten besonders anspruchsvollen Anwendungen einsetzen lassen.

Es ist vor diesem Hintergrund eine wichtige Aufgabe der Erfindung, verbesserte Gefäßverschlüsse ohne halogenhaltige Materialien mit einer Dichtungseinlage vorzuschlagen, die sowohl als Drehverschlüsse als auch als abhebelbare Verschlüsse ausgeführt werden können und einfacher, damit kostengünstiger herstellbar sind. Eine weitere wichtige Aufgabe der Erfindung ist es, solche Gefäßverschlüsse mit einer verbesserten Dichtigkeit, insbesondere gegenüber Ausläufern, auch bei massenmäßig hergestellten Gefäßen wie Weinflaschen, Bierflaschen und dgl. zu schaffen.

Dabei soll die gute Barrierewirkung der bekannten Dichtungseinlage erhalten bleiben.

Zu den Aufgaben der Erfindung gehört es, Gefäßverschlüsse mit einer Dichtungseinlage zu schaffen, die mittels in-shell molding erzeugt werden kann.

Die Dichtungseinlage soll sehr weich ausgestaltet werden können, um die Flasche auch bei Haarrissen und dgl. Mündungsmängeln zuverlässig abdichten zu können.

Es soll möglich sein, die Dichtungseinlage mit einer Profilierung zu versehen und das Material der Dichtungseinlage soll tiefziehfähig sein.

Der Gefäßverschluss soll auch über lange, mehrere Jahre und ggf. Jahrzehnte umfassende Anwendungszeiträume, auch im Kontakt mit alkoholischen Flüssigkeiten wie etwa Wein, geschmacklich neutral bleiben und die erforderliche Dichtigkeit gewährleisten.

Weitere Aufgaben und Vorteile der Erfindung ergeben sich aus der unten folgenden Beschreibung einschließlich der Ausführungsbeispiele.

Die Erfindung löst diese und andere Aufgaben mit den Merkmalskombinationen der unabhängigen Patentansprüche.

Vorteilhafte Ausgestaltungen sind in den Unteransprüchen definiert.

In der nun nachfolgenden detaillierten Beschreibung der Erfindung werden zunächst Definitionen und Merkmale behandelt, die unabhängig von einzelnen Ausführungsbeispielen von allgemeiner Bedeutung für die Erfindung und deren optionale Ausgestaltungen sind. Die weiter oben schon gegebenen Definitionen sind zu berücksichtigen und stehen nicht im Widerspruch zu den folgenden Ausführungen. Sofern in der Beschreibung nichts Abweichendes angegeben ist, haben technische Begriffe ihre übliche Bedeutung.

Danach wird die Erfindung anhand einzelner Ausführungsbeispiele veranschaulicht.

Definitionen und Messmethoden:
Ein Gefäßverschluss besteht aus einem Körper aus Metall und/oder Kunststoff und einer darin angeordneten Dichtungseinlage. Der Gefäßverschluss kann ein Drehverschluss (mit Gewinde-Elementen einschließlich Nocken und dgl.) oder ein (ohne Verdrehung des Gefäßverschlusses) abnehmbarer, dann meist abhebelbarer Verschluß ("pry-off"-Verschluss) einschließlich Kronkorken, Schnappdeckel und dgl. sein. Ein Stopfen ist kein Gefäßverschluss in diesem Sinne.

Eine Dichtungseinlage im Sinne der Erfindung ist ein prinzipiell scheiben- oder ringförmiges (ggf. mit einer Profilierung versehenes) Formteil, das entweder insgesamt aus einem homogenen Polymercompound besteht, oder mindestens zwei verschiedene, jeweils homogene Materialien umfasst, von denen wenigstens eines ein homogenes Polymercompound ist.

Unter "in-shell molding" werden nicht nur die bekannten Verfahren verstanden, bei denen ein thermisch fließfähig gemachtes Polymercompound in den Verschlusskörper eingetragen und dort zu einer scheibenförmigen Dichtungseinlage gestempelt wird (SACMI- bzw. Zapata-Verfahren), sondern auch solche Verfahren, bei denen das Polymercompound durch Injektion, ggf. nur im Randbereich der Dichtungsfläche, eingetragen und zu einer ringförmigen Dichtungseinlage geformt wird.

Polymercompounds im Sinne der Erfindung sind Gemische von einem oder (meist) mehreren Polymeren mit Zusatzstoffen (z. B. Weichmachern, anti-blocking agents, Gleitmitteln, Antioxidantien, Stabilisierungsmitteln, Füllstoffen, Pigmenten...), die die Eigenschaften des Compounds an den vorgesehenen Einsatzzweck anpassen, seine Verarbeitung oder Benutzung erleichtern und dgl.

Ein thermoplastisches Polymer ist ein industriell hergestelltes Polymer mit elastischen Eigenschaften, die auf der Molekularstruktur beruhen. Typische thermoplastisches Polymer sind (Block-) Copolymerisate von Styrol und Butadien, auch mit Zusätzen anderer Monomere (Ethylen, Isopren, ...).

Ein Barrierepolymer ist im Sinne der Erfindung ein Polymer, das in Reinform dem Durchtritt von Sauerstoff einen Widerstand ("intrinsischer Widerstand") entgegensetzt, der bei Polymeren mit einer Shore D-Härte von maximal 40 eine Sauerstoffdurchlässigkeit von maximal 1000 cm³·100 µm/m²·d·bar entspricht, oder ohne Begrenzung der Shore D-Härte (insbesondere bei Shore D oberhalb 40) eine Sauerstoffdurchlässigkeit von maximal 10 cm³·100 µm/m²·d·bar entspricht. Diese Sauerstoffdurchlässigkeit wird in Anlehnung an DIN 53380-3 bei 100% Sauerstoffkonzentration, 100% relativer Luftfeuchtigkeit und atmosphärischem Druck, aber bei 26°C Messtemperatur bestimmt und auf eine Schichtstärke des Polymer-Probenstücks von 100 µm bezogen (also ggf. umgerechnet). Typische Barrierepolymere im Kontext dieser Erfindung sind thermoplastische Elastomere.

Die Sauerstoffmessung wird mit einem OX-Tran 2/60 von Mocon durchgeführt.

Für die Messung der Sauerstoffpermeabilität wird eine 150 x 150 x 0,7 mm dicke Platte gepresst und daraus entsprechende Prüfkörper (10 cm²) ausgeschnitten. Der Prüfkörper wird konditioniert. Der Prüfkörper wird zwischen den beiden Teilen der Permeationskammer eingebracht und gasdicht eingespannt. Zum Abdichten des Prüfkörpers mit der unteren Permeationskammer wird ein Vakuumfett verwendet. Auf der einen Seite des Prüfkörpers strömt mit einer bestimmten Durchflussrate während der Messung Formiergas an, auf der anderen Seite der Messkammer wird Sauerstoff durchgeleitet. Der Sauerstoff wandert durch die Folie in das Trägergas (Formiergas). Das Formiergas wird zu einem Sensor transportiert, welcher die Konzentration an Sauerstoff im Formiergas bestimmt. Vor jeder Messung wird 1 h vorkonditioniert. Nach einer bestimmten Zeit bei 1 bar Druck und Raumtemperatur erreicht die Konzentration an Sauerstoff ein konstantes Plateau, woraufhin die Permeabilität bestimmt werden kann.

Prozentangaben in dieser Beschreibung sind Gewichtsprozente bezogen auf Gesamtgewicht, sofern sie Anteile von Komponenten an einem Produkt aus mehreren Komponenten betreffen.

Die Sauerstoff-Transmissionsrate ("Oxygen transmission rate", OTR) ist ein Maß für die Sauerstoff-Durchlässigkeit eines Materials (Reinstoff oder Stoffgemisch). Sie wird bestimmt in Anlehnung an DIN 53380-3, wie vorstehend angegeben. Die OTR wird in Einheiten von cm³·100µm/m²·d·bar angegeben. Bei dem vorstehend genannten Meßverfahren liegt die Genauigkeit der Bestimmung bei etwa 4 cm³· 100 µm·m²·d·bar.

Die Schmelzflussrate ("Melt flow rate", MFR) gibt die Fließfähigkeit eines Stoffes oder Stoffgemisches bei 190°C und 5 kg Gewichtsbelastung an. Sie wird bestimmt nach ISO 1133, und in g/10 min angegeben.

Die Shore D - Härte gibt die Härte eines Stoffes oder Stoffgemisches an. Sie wird in Anlehnung an die ASTM 2240 an mindestens 6 mm dicken Pressplatten bestimmt. Die Messzeit beträgt 5 s., nachdem die entsprechenden Probekörper bei 180°C im "compression moulding"-Verfahren hergestellt wurden.

Die Shore A - Härte wird analog der Shore D - Härte in Anlehnung an ASTM D 2240 bestimmt. Auch hier beträgt die Messzeit 5s.

Der Druckverformungsrest ("compression set", DVR) ist ein Maß für das Rückstellverhalten (bleibende Verformung) eines Stoffes oder Stoffgemisches. Die Prüfkörper werden im Spritzgussverfahren bei Temperaturen zwischen 170 - 230°C hergestellt. Die Prüfkörper haben einen Durchmesser von 25 mm und eine Dicke von 6 mm. Die Bemessungstoleranzen entsprechen ISO 815-1. Die betreffenden Prüfkörper werden konditioniert. Beim DVR wird bei einer jeweils angegebenen Temperatur der jeweilige Prüfkörper einer Kompression von 25% für 22 h unterworfen. Nach einer Belastungsdauer von 22 h wird der Prüfkörper entspannt und nach 30 min erneut die Dicke des Prüfkörpers gemessen bzw. die bleibende Verformung bestimmt. Sie wird in Anlehnung an die ISO 815-1 bei der jeweils angegebenen Temperatur nach einer Belastung über 22 Stunden gemessen und in Prozenten der bleibenden Kompression, bezogen auf das Probestück vor der Kompression angegeben.

Ein DVR von 25% entspricht also einer bleibenden "Stauchung" des Probestücks um ein Viertel der ursprünglichen Höhe (Dicke).

Ein Compound ist im Sinne der Erfindung verarbeitbar, wenn es in herkömmlicher Weise auf dem für die Herstellung von Gefäßverschlüssen mit Polymer-basierten Dichtungseinlagen verarbeitbar ist.

Die Standard-Dimensionen von einfachen Schraubkappen sind 28 mm Außendurchmesser (bzw. Breite) bei 15 mm äußerer Höhe (d. i. Länge). Die von "longcaps", wie speziell erfindungsgemäß für Weinflaschen und dgl. vorgesehen, sind 30 mm Außendurchmesser (d. i. Breite) bei 60 mm äußerer Höhe (d. i. Länge),

Pasteurisierbar ist ein Material gemäß der Erfindung, wenn es in einer industriellen Pasteurisierung bei 62°C bis 85°C einen gasdichten Verschluss erlaubt und seine Gebrauchseigenschaften für die vorgesehene Anwendung nicht verliert.

### Detaillierte Beschreibung der Erfindung:

Erfindungsgemäß ist ein Gefäßverschluss aus Metall oder Kunststoff für ein Gefäß zur Aufnahme von Getränken oder Nahrungsmitteln, das eine mit dem Gefäßverschluss zu verschließende Mündung aufweist, mit einer Dichtungseinlage versehen, die im Gefäßverschluss so angeordnet ist, dass sie die Mündung dichtend verschließt, wenn der Gefäßverschluss am Gefäß angebracht ist.

Die Dichtungseinlage umfasst in einer ersten bevorzugten Ausführungsform ein Polymercompound, das wenigstens zwei verschiedene Barrierepolymere, aber keine halogenhaltigen Polymere enthält. Solche Dichtungseinlagen sind vielfältig einsetzbar, besonders dort, wo bisher die Dichtungseinlage nur ein Barrierepolymer enthält. Sie zeigen durch das Zusammenspiel der mehreren Barrierepolymere eine verbesserte Einstellbarkeit von Härte und Elastizität der Dichtungseinlage, bei generell verbesserter Barrierefunktion.

Für "in-shell molding" - Verfahren wird man bevorzugen, dass die Dichtungseinlage die wenigstens zwei verschiedenen Barrierepolymere im Gemisch miteinander umfasst.

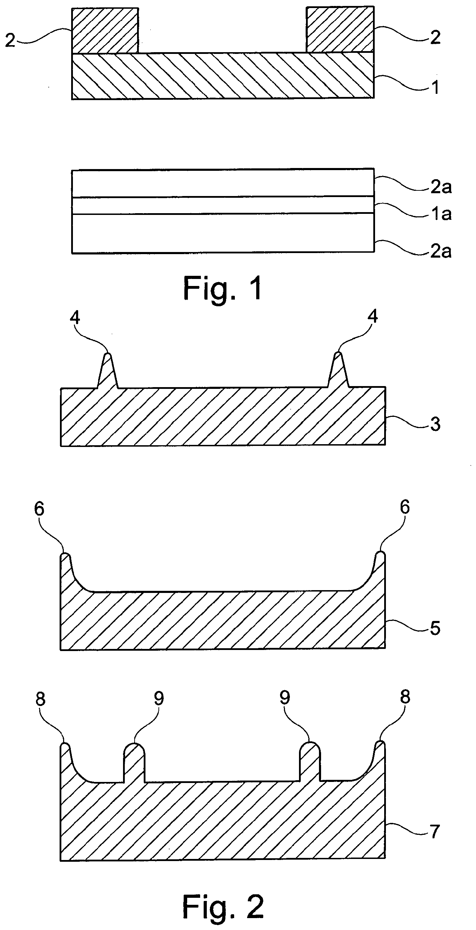

Insbesondere für "out-shell molding", wie später anhand Figure 1 diskutiert, kann man stattdessen vorsehen, dass die Dichtungseinlage wenigstens zwei verschiedene Barrierepolymere aufweist, die im Wesentlichen miteinander unvermischt sind (und z.B. in verschiedenen Schichten einer mehrschichtigen Struktur auftreten).

Generell sind die erfindungsgemäß verwendeten Barrierepolymere aus der Gruppe ausgewählt, die Butylkautschuk (IIR); Polyisobutylen (PIB); Styrol-Block Copolymere, insbesondere Styrol-Isobutylen-Styrol (SIBS), Styrol-Isopren-Styrol (SIS), Styrol-Vinylisopren-Styrol und hydriertes Styrol-Vinylisopren-(co-)Isopren-Styrol; Polyamid (PA); Ethylen-Vinylalkohol-Copolymere (EVOH); und thermoplastische Elastomere (TPE-V), insbesondere Allyl-Styrol mit einem Isobuten-Gehalt von >50% in der Kautschukkomponente umfasst, wobei vorzugsweise der Gesamtgehalt an Isobutylen-basierten Polymeren in der Dichtungseinlage 60 Gew.%, mehr bevorzugt 55 Gew.% und besonders bevorzugt 50 Gew.% nicht überschreitet, um die Klebrigkeit der Polymercompounds in praktikablen Grenzen zu halten.

Die Dichtungseinlage enthält wenigstens ein weiteres (anderes) Polymer, das kein Barrierepolymer ist und der Einstellung von Härte und Elastizität der Dichtungseinlage dient, aber ggf. auch zur Barrierewirkung der Dichtungseinlage beitragen kann. Dieses weitere (andere) Polymer ist meist ein Polyolefin, insbesondere Polyethylen und/oder ein Polyethylen-Copolymer, vorzugsweise PE-HD, PE-LD, PE-LLD (C₄, C₆ oder C₈) und/oder VLDPE, MD-LDPE, EVA, EEA, EMA, EAA, EBA, Polypropylen und/oder Propylen-Copolymer umfasst.

Die Dichtungseinlage kann stattdessen oder zusätzlich ein TPE, insbes. SBS, SEBS, SIBS, SIS, SEP, SEPS, SEEPS umfassen.

In dabei bevorzugten Ausführungsformen enthält die Dichtungseinlage ein Gemisch von Butylkautschuk (IIR) und Styrol-Isobutylen-Styrol (SIBS). Der Butylkautschuk hat besonders gute Barriereeigenschaften und ist vorteilhaft weich, dabei aber nicht sehr elastisch (DVR) und neigt zum Kaltfließen (Retardation). Das SIBS hat eine etwas höhere Sauerstoffpermeabilität und ist härter, dafür aber elastischer und neigt zudem weniger zum Kaltfließen.

Die Kombination von Butylkautschuk und SIBS ist den Einzelbestandteilen überlegen, was Weichheit und Elastizität (und damit die Dichtwirkung) angeht. Die Dichtungsfunktionalität lässt sich noch weiter verbessern, wenn zusätzlich wenigstens ein Polyolefin (s.o.) enthalten ist. Hierdurch wird die Kriechneigung reduziert und die Verarbeitbarkeit verbessert.

In besonders bevorzugten Ausführungsformen enthält die Dichtungseinlage bis zu 25 Gew.% Butylkautschuk, bis zu 65 Gew.% SIBS und vorzugsweise bis zu 60 Gew.%, mehr bevorzugt bis zu 55 Gew.% und besonders bevorzugt bis zu 50 Gew.% PE-HD, PE-LD und/oder PE-LLD.

Vorzugsweise enthält das Polymercompound, das die Dichtungseinlage bildet, wenigstens einen Zusatzstoff wie beispielsweise einen Weichmacher, etwa Polybuten-Öl oder Weißöl; ein klebrigkeitsverringerndes Mittel ("anti-blocking agent") und/oder ein Gleitmittel, wobei der Weichmachergehalt vorzugsweise weniger als 70 Gew.-%, mehr bevorzugt weniger als 60 Gew.-%, noch mehr bevorzugt weniger als 50 Gew.-%, besonders bevorzugt weniger als 40 Gew.-%, speziell weniger als 30 Gew.-%, spezieller weniger als 20 Gew.-%, und spezieller weniger als 10 Gew.-%, noch mehr bevorzugt weniger als 5 Gew.-%, noch mehr bevorzugt weniger als 1 Gew.-% beträgt oder die Dichtungseinlage frei von Weichmachern ist.

Das im Polymercompound enthaltene Polyolefin weist generell eine Schmelzflussrate (melt flow rate, MFR) bei 5 kg Belastung und 190°C oberhalb 15 g/10min, vorzugsweise wenigstens 20 g/10min auf.

Es ist generell vorteilhaft, wenn die Dichtungseinlage eine Shore D - Härte von weniger als 50, vorzugsweise weniger als 40 und besonders bevorzugt weniger als 30 hat, wobei oft die Shore D - Härte zwischen 15 und 40, vorzugsweise zwischen 25 und 40, liegt.

Die Shore A - Härte der Dichtungseinlage liegt dabei vorzugsweise zwischen 55 und 100.

Generell soll die Dichtungseinlage eine OTR unterhalb 940 cm³·100µm/m²·d·bar, insbes. unterhalb 850 cm³·100µm/m²·d·bar, mehr bevorzugt unterhalb 800 cm³·100µm/m²·d·bar, spezieller unterhalb 770 cm³·100µm/m²·d·bar, noch spezieller unterhalb 700 cm³·100µm/m²·d·bar, zeigen, wobei (insbes. für Anwendungen bei Weinverschlüssen) eine OTR unterhalb 670 cm³·100µm/m²·d·bar, spezieller unterhalb 630 cm³·100µm/m²·d·bar, bevorzugt unterhalb 600 cm³·100µm/m²·d·bar und besonders bevorzugt unterhalb 560 cm³·100µm/m²·d·bar bevorzugt ist.

Erfindungsgemäße Dichtungseinlagen weisen vorzugsweise eine Schmelzflussrate (5kg, 190°C) von mindestens 5, vorzugsweise mindestens 10 und besonders bevorzugt mindestens 15 g/10 min auf. Speziell bevorzugt sind Schmelzflussraten von wenigstens 20g/10min.

Um die erwünschte Elastizität zu erreichen, soll die Dichtungseinlage bevorzugt einen Druckverformungsrest (DVR) bei 25 % Kompression, 23°C und 22 h Lagerung zwischen 20 % und 70 %, insbes. zwischen 40 % und 65 %, einen DVR bei 25 % Kompression, 40°C und 22 h Lagerung zwischen 45 % und 70 %, und einen DVR bei 25 % Kompression, 70°C und 22 h Lagerung zwischen 50 % und 80 % haben, was durch die qualitative und quantitative Zusammensetzung des Polymer-Compounds erreicht werden kann.

In besonders vorteilhaften Ausführungsformen enthält die Dichtungseinlage Butylkautschuk, SIBS und wenigstens ein Polyolefin, vorzugsweise in den oben genannten Gehaltsbereichen und zeigt eine Sauerstoffdurchlässigkeit unterhalb 700 cm³·100µm/m²·d·bar bei einem DVR (25 % Kompression, 23°C, 22 h Lagerung) zwischen 40 % und 65 % und einer Schmelzflussrate (5kg/190°C) von mehr als 1 g/10min, insb. mehr als 10 g/10 min.

Der Gefäßverschluss kann grundsätzlich ein beliebiger Dreh- oder "pry-off"-Verschluß sein. Vorzugsweise ist er jedoch eine Schraubkappe, insb. eine Aluminium-Schraubkappe mit einem Durchmesser von 28 mm, 30 mm oder 38 mm, insbesondere 28 x 15 mm oder 30 x 60 mm ("longcap"), oder ein Kronkork, insbes. mit einer Blechdicke von weniger als 0.21 mm.

Der Gefäßverschluss ist vorzugsweise mitsamt seiner Dichtungseinlage, insbes. bei Temperaturen im Bereich von 62°C bis 70°C, pasteurisierbar.

Die Dichtungseinlage ist vorzugsweise als Ring oder Scheibe ausgebildet und hat eine umlaufende, im angebrachten Zustand des Gefäßverschlusses in Richtung zur Gefäßmündung vortretende Dichtungslippe. Figur 2 zeigt schematisch im Querschnitt mehrere Varianten dieser bevorzugten Ausführungsform, bei denen eine prinzipiell scheibenförmige Dichtungseinlage (3, 5, 7) eine oder zwei umlaufende Dichtungslippen (4, 6, 8, 9) aufweist, die vorzugsweise beim in-shell molding der Dichtungseinlage geformt werden. Dabei kann man eine einzelne Dichtungslippe vorsehen, die radial so angeordnet ist, dass sie innenseitig in (4) oder außenseitig (6) auf die (nicht gezeigte) Gefäßmündung greift. Man kann aber auch zwei Dichtungslippen (8, 9) so anordnen, dass sie zusammen die Gefäßmündung innen- und außenseitig umgreifen.

In anderen bevorzugten Ausführungsformen ist die Dichtungseinlage aus zwei unterschiedlichen Elementen ausgebildet, von denen das eine ein ring- oder (vorzugsweise) scheibenförmiges erstes Element ist, das vorzugsweise mit dem Metall- oder Kunststoffmaterial des Verschlusskörpers verbunden ist, und das andere ein (vorzugsweise) ring- oder scheibenförmiges zweites Element ist, das auf dem ersten Element wenigstens in dem Bereich angeordnet ist, in welchem der angebrachte Gefäßverschluss die Gefäßmündung kontaktiert. Figur 1 zeigt eine besonders bevorzugte Ausführungsform, bei der das erste Element (1) scheibenförmig ist und das zweite Element (2) ringförmig ist.

Beide Elemente können aus dem gleichen Polymercompound ausgebildet sein, z.B. wenn es Vorteile bietet, die Dichtungseinlage mittels out-shell molding herzustellen, etwa weil man zwischen den Elementen noch eine Metallfolie oder dergleichen anordnen will.

Es kann stattdessen vorteilhaft sein, dass das erste und das zweite Element aus unterschiedlichen Materialien bestehen, wobei das Material des zweiten Elements wenigstens ein Barrierepolymer, vorzugsweise wenigstens zwei Barrierepolymere, umfasst.

In einer anderen, bevorzugten Ausführungsform (Figur 1) ist die Dichtungseinlage aus zwei unterschiedlichen Materialien ausgebildet, von denen das erste Material (la) ein scheibenförmiges Element bildet, das sandwichartig zwischen Schichten des zweiten Materials (2a) liegt, wobei das zweite Material ein Compound mit wenigstens einem Barrierepolymer und einer Shore D - Härte von weniger als 40 ist und das erste Material ein Compound oder ein reines Polymer mit einer größeren Härte als Shore D 40 ist. Wenn das zweite Material die nötige Weichheit bereitstellt, kann das erste Material vorteilhaft ebenfalls ein Barrierepolymer umfassen, vorzugsweise ausgewählt aus Ethylen-Vinylalkohol-Copolymer (EVOH) und (ggf. modifiziertem) Polyamid (PA), oder anderen harten Materialien mit hoher Barrierewirkung.

Die Dichtungseinlage kann eine Sauerstoff-bindende Verbindung ("Scavenger"), insbesondere Natriumsulfit enthalten. Sie kann zur Verbesserung der Barrierewirkung mit einer Metallfolie versehen, insbes. kaschiert sein, insbesondere wenn sie im out-shell molding Verfahren hergestellt wird.

Zur weiteren Verbesserung der Dichtung kann die Dichtungseinlage (in dem die Gefäßmündung berührenden Bereich) ein geschäumtes Polymercompound umfassen.

Die erfindungsgemäßen Polymercompounds umfassen vorzugsweise wenigstens zwei Barrierepolymere, die sich wenigstens in einem physikalischen Parameter (beispielsweise der Shore-Härte) unterscheiden. Das wird generell vorzugsweise dadurch erreicht, dass die Barrierepolymere verschiedenen Stoffklassen zugehören. Der Begriff "Stoffklassen" ist hier so zu verstehen, wie bei Kunststoffen üblich, in dem zu "verschiedenen" Stoffklassen Polymere gehören, die sich durch funktionelle Gruppen bzw. eine unterschiedliche Grundstruktur unterscheiden. Daher gehören z.B. Butylkautschuk und SIBS zu verschiedenen Stoffklassen. Obwohl sie sich in mehreren physikalischen Parametern unterscheiden, gehören danach PE-HD und PE-LD nicht zu verschiedenen Stoffklassen.

Bevorzugte Polymercompounds enthalten wenigstens eines, vorzugsweise wenigstens zwei Barrierepolymere, die thermoplastische Elastomere sind.

Bevorzugte Barrierepolymere sind dabei z.B. Butylkautschuk (HR); Polyisobuten (PIB); Styrol-Block Copolymere, insbesondere Styrol-Isobutylen-Styrol (SIBS), Styrol-Isopren-Styrol (SIS), Styrol-Vinylisopren-Styrol und hydriertes Styrol-Vinylisopren-(co-)Isopren-Styrol; Polyamid (PA); Ethylen-Vinylalkohol-Copolymere (EVOH); und thermoplastisches Vulkanisat TPE-V, insbesondere solche mit einem Isobuten-Gehalt von >50% in der Kautschukkomponente, wobei vorzugsweise der Gesamtgehalt an Isobuten-basierten Polymeren in der Dichtungseinlage 60 Gew.-%, mehr bevorzugt 55 Gew.-% und besonders bevorzugt 50 Gew.-% nicht überschreitet.

Vorzugsweise liegt die Sauerstoffduchlässigkeit eines erfindungsgemäßen Barrierepolymers bei max. 900 cm³·100µm/m²·d·bar, mehr bevorzugt bei max. 800 cm³·100µm/m²·d·bar, spezielle bevorzugt bei max. 700 cm³·100µm/m²·d·bar, und noch mehr bevorzugt bei max. 600 cm³·100µm/m²·d·bar, wenn die Shore D-Hörte des Barrierepolymers nicht größer ist als 40 vorzugsweise bei max. 8 cm³·100µm/m²·d·bar, noch mehr bevorzugt bei max. 6 cm³·100µm/m²·d·bar.

Von spezieller Bedeutung ist im Kontext dieser Erfindung die Verwendung eines Gefäßverschlusses der vorstehend beschriebenen Art zum Verschluss einer Wein-, Sekt- oder Champagnerflasche.

Dabei wird ein Polymermaterial, das wenigstens ein Barrierepolymer umfasst, als Dichtungseinlage in einem Verschluss, insbes. einer Schraubkappe und speziell einer Aluminium-Schraubkappe, vorzugsweise mit den Abmessungen 30x60 mm ("longcap"), für eine Wein-, Sekt- oder Champagnerflasche eingesetzt. Ähnliche Verschlüsse lassen sich vorteilhaft für Spirituosen (Alkoholgehalt oberhalb 18 Vol.%, insbesondere oberhalb 24 Vol.%) verwenden.

Bei einer anderen bevorzugten Verwendung der hier beschriebenen Gefäßverschlüsse sind diese ausgebildet als Kronkorken mit einer Blechdicke von weniger als 0.21 mm, vorzugsweise von weniger als 0.20 mm und besonders bevorzugt von weniger als 0.18 mm.

### Ausführungsbeispiele:

In einer Versuchsreihe (Runs 1 bis 12) wurden unterschiedliche Compounds hergestellt und auf ihre Eignung als Dichtungseinlage überprüft. Dazu wurden die Compounds in üblicher Weise durch Mischen unter Erwärmung im Extruder hergestellt und dann zu Probestücken geformt, die den Vorschriften der jeweils anzuwendenden Messmethode (vgl. oben unter "Definitionen und Messmethoden") entsprachen. Die Ergebnisse sind in der Tabelle 1 dargestellt.

**Tabelle 1**

| | **Run 0** | **Run 1** | **Run 2** | **Run 3** | **Run 4** | **Run 5** | **Run 6** | **Run 7** | **Run 8** | **Run 9** | **Run 10** | **Run 11** | **Run 12** |
|---|---|---|---|---|---|---|---|---|---|---|---|---|---|
| **Butylkautschuk** | 24,46 | 19,7 | | 19,7 | | | 19,7 | 19,7 | | 9,7 | 9,7 | 10 | 10 |
| **SIBS** | | 50 | 35 | 40 | 60 | 37,5 | 40 | 30 | 50 | 36 | 35 | 30 | 30 |
| **PE-HD MFR 2** | 24,2 | | | | | | | | | | | | |
| **PE-HD MFR 30** | 49,85 | 29,5 | 49,2 | 29,5 | 29,2 | 51,7 | 39,5 | 49,5 | 39,2 | 44,5 | 44,5 | 30,6 | 30,6 |
| **PE-LD MFR 20** | | | | 10 | 10 | | | | 10 | 10 | | 28,6 | |
| **PE-LLD MFR 20** | | | | | | | | | | | 10 | | 28,6 |
| **SEBS EH 504** | | | 10 | | 10 | 10 | | | | | | | |
| **Polybuten Öl** | | | 5 | | | | | | | | | | |
| **Talkum** | 0,74 | | | | | | | | | | | | |
| **Titandioxid** | 0,25 | 0,3 | 0,3 | 0,3 | 0,3 | 0,3 | 0,3 | 0,3 | 0,3 | 0,3 | 0,3 | 0,3 | 0,3 |
| **Irganox 1010** | 0,05 | 0,15 | 0,15 | 0,15 | 0,15 | 0,15 | 0,15 | 0,15 | 0,15 | 0,15 | 0,15 | 0,15 | 0,15 |
| **Irgafos 168** | 0,2 | 0,15 | 0,15 | 0,15 | 0,15 | 0,15 | 0,15 | 0,15 | 0,15 | 0,15 | 0,15 | 0,15 | 0,15 |
| **Erucamid** | 0,2 | 0,2 | 0,2 | 0,2 | 0,2 | 0,2 | 0,2 | 0,2 | 0,2 | 0,2 | 0,2 | 0,2 | 0,2 |
| **Summe** | 100 | 100 | 100 | 100 | 100 | 100 | 100 | 100 | 100 | 100 | 100 | 100 | 100 |
| **Shore A** | 68 | 68 | - | 80 | 83 | 94 | 86 | 94 | 92 | 94 | 95 | 95 | 96 |
| **Shore D** | 50 | 16 | - | 25 | 26 | 36 | 25 | 34 | 35 | 36 | 36 | 37 | 38 |
| **MFR [190°C/5kg]** | 17,1 | 4,8 | - | 8,2 | 7,8 | 19,4 | 9,2 | 16,0 | 15,2 | 18,7 | 17,7 | 18,7 | 20,0 |
| **OTR 25°C, 100% RH [cm³*100µm/m²d]** | 475 | 678 | - | 660 | 764 | 658 | 604 | 541 | 621 | 533 | 553 | 622 | 589 |
| **Druckverformungsrest bei 23°C** | - | - | - | 50 | - | - | - | 57 | 37 | - | - | - | - |
| **Druckverformungsrest bei 40°C** | - | - | - | 59 | - | - | - | 60 | 57 | - | - | - | - |
| **Druckverformungsrest bei 70°C** | - | - | - | 67 | - | - | - | 62 | 65 | - | - | - | - |
| **Verarbeitbarkeit** | Ja | Ja | Nein | Ja | Ja | Ja | Ja | Ja | Ja | Ja | Ja | Ja | ja |
| **Klebrigkeit** | Nein | Hoch | - | Mittel | Nein | Nein | Niedrig | Nein | Nein | Nein | Nein | Nein | nein |

Bei einigen dieser Compounds (Runs 0, 2, 4, 5 und 8) umfasst die Dichtungseinlage nur ein Barrierepolymer, bei den anderen Compounds (Runs 1, 3, 6, 7, 9 bis 12) umfasst die Dichtungseinlage zwei Barrierepolymere.

Als Barrierepolymere wurden Butylkautschuk (X Butyl RB 101-3) und SIBS (Sibstar 102T FD) eingesetzt.

Als Polyolefinkomponente wurden zwei verschiedene PE-HD's (MFR = 2 bzw. 30, Dichte 0,954 g/cm³), PE-LD (MFR = 20, Dichte 0,924 g/cm³) und PE-LLD (MFR = 20, Dichte 0,924 g/cm³) eingesetzt.

Zur Verringerung der Klebrigkeit wurde im Run 0 Talkum (Luzenac) eingesetzt.

Als Stabilisatoren bzw. Antioxidantien dienten Irganox 1010 und Irgafos 168.

Finawax E ist Erucamid, ein Gleitmittel.

Die Versuche lassen verallgemeinernd folgende Schlussfolgerungen zu, die für alle erfindungsgemäßen Polymercompounds, und die aus diesen gefertigten Dichtungseinlagen, relevant sind:
Run 0 ist ein Compound mit Butylkautschuk als einzigem Barrierecompound. Die Sauerstoffpermeabilität ist niedrig, aber die Shore D-Härte ist für Anwendungen bei Weinflaschen - Verschlüssen zu hoch. Solche Compounds mit nur einem Barrierecompound können aber zum Beispiel bei Kronkorken mit verringerter Blechdicke verwendet werden.

Run 1 hat einen Gesamtgehalt an Butylkautschuk und SIBS von fast 70 Gew.% und ist deutlich weicher als Run 0. Allerdings ist das Compound sehr klebrig und das Granulat neigt zum Blocken. Die anderen Runs mit geringerem Gesamtgehalt an Isobutylen-basierenden Polymeren (vgl. Run 4 mit 60 Gew.% SIBS) waren weniger klebrig. Unterhalb eines Gesamtgehaltes von 50 Gew.% an Isobuten-basierten Polymeren zeigte sich keine Neigung zum Blocken mehr.

Run 2 hat einen relativ kleinen Gehalt an SIBS als einzigem Barrierepolymer, und enthält SEBS zusammen mit Polybuten-Öl. Dieser Ansatz ließ sich nicht verarbeiten. Vergleicht man mit dem ähnlich konzipierten Run 5, der sich verarbeiten ließ, dürfte die Ölkomponente der Grund hierfür sein.

Run 3 hat mit rund 60 Gew.% einen sehr hohen Gesamtgehalt von Isobutenbasierenden Barrierepolymeren im Vergleich zu Run 0 eine sehr geringe Härte bei guten, wenn auch nicht optimalen Barriereeigenschaften. Der Ansatz ließ sich verarbeiten, das Produkt ist aber noch mittelmäßig klebrig.

Run 4 hat ebenfalls rund 60 Gew.% Barrierepolymer, aber nur eines (SIBS). Das Compound ist härter als Run 3, die Sauerstoffpermeabilität ist höher. Die Kombination zweier Barrierepolymere (Run 3) ergibt eine niedrigere Sauerstoffpermeabilität.

Run 5 enthält einen relativ geringen Gehalt an SIBS als einzigem Barrierepolymer. Der Ansatz enthält kein Weichmacher-Öl und konnte verarbeitet werden; das Produkt ist nicht klebrig. Das Polymercompound ist härter und zeichnet sich durch eine höhere Sauerstoffbarriere als Run 4 aus. Dies liegt im höheren PE-HD Anteil begründet. Trotz des niedrigeren SIBS-Gehalts ist die Barrierewirkung besser als bei Run 4

Run 6 entspricht im Gehalt an Barrierepolymeren Run 3, bei leicht veränderter Polyolefin-Komponente. Durch den Einsatz eines höheren Anteils an PE-HD nimmt die Härte des Polymercompounds zu. Die Sauerstoffpermeabilität ändert sich nur geringfügig. In gewissem Umfang lassen sich Härte und Barrierewirkung also durch den Polyolefingehalt einstellen.

Run 7 ähnelt Run 3 und Run 6, bei etwas geringerem SIBS-Gehalt und erhöhtem Gehalt an PE-HD. Mit zunehmenden PE-HD Anteil und abnehmendem SIBS Gehalt nimmt die Härte der Polymercompounds zu, die Sauerstoffpermeabilität hingegen nimmt leicht ab. Run 7 gibt einen Einblick hinsichtlich des Rückstellverhaltens mittels der DVR-Daten. Dieses Compound repräsentiert eine besonders bevorzugte Art von Dichtungseinlagen, speziell für den Einsatz bei Weinflaschen-Verschlüssen ("longcaps").

Run 8 enthält nur SIBS als Barrierepolymer, und ist zu vergleichen mit Run 4. Das Compound enthält weniger SIBS, aber mehr PE-HD und ist demnach härter. Die Sauerstoffpermeabilität ist geringfügig niedriger. Die Barrierefunktion ist trotz des verringerten Gehalts an Barrierepolymer deutlich besser.

Run 9 ist mit Run 8 hinsichtlich der Härte und der Sauerstoffpermeabilität vergleichbar. Der Gesamtgehalt an Barrierepolymeren ist niedriger, der Polyolefingehalt ist höher. Bei vergleichbarer Härte ist die Barrierewirkung hervorragend. Auch dies ist ein Compound, das sich besonders gut für Dichtungseinlagen verwenden lässt, die die Aufgaben der Erfindung lösen.

Run 10 unterscheidet sich von Run 9 durch den Ersatz von PE-LD durch PE-LLD. Die Barrierefunktion ist bei gleicher Härte etwas geringer, aber immer noch gut.

Run 11 hat eine ähnliche Zusammensetzung hinsichtlich der Barrierepolymere wie Run 9 und Run 10 hat, besitzt aber einen erhöhten Anteil an PE-LD. Durch die geringere Kristallinität von PE-LD gegenüber PE-HD erhöht sich die Sauerstoffpermeabilität. Das würde die Materialkosten senken, aber auf Kosten einer noch größeren Härte und einer deutlich geringeren Barrierewirkung. Man beachte, dass sich auch ein Compound wie Run 11 als Dichtungseinlage für "longcaps" verwenden lässt. Die Grenzen für Härte und Barrierefunktion liegen gemäß der Erfindung vorzugsweise bei Shore D = maximal 50 und OTR = maximal 940 cm³·100µm/m²·d·bar.

Run 12 ähnelt Run 11, wobei das PE-LD durch PE-LLD ersetzt ist. Beide sind hinsichtlich der Härte und der Sauerstoffpermeabilität vergleichbar.

Generell zeigt sich die Überlegenheit von Compounds mit wenigstens zwei Barrierepolymeren im Vergleich mit solchen, die nur ein Barrierepolymer (gleicher Art) umfassen. Es zeigt sich auch, dass sich die Eigenschaften der aus dem Compound erzeugten Dichtungseinlage durch Zusatz anderer Polymere, insbes. von Polyolefinen, anpassen und verbessern lassen. Der Vergleich mit Runs 0 und 2 zeigt, dass es jedoch auf einen hohen Gehalt an Polyolefinen allein nicht ankommt. Compounds wie Runs 0, 4, 5 und 8 mit nur einem Barrierepolymer lassen sich jedenfalls als Dichtungseinlagen für Kronkorken mit verringerter Blechdicke einsetzen.

Die hier dargelegten, an Probestücken von homogenen Compounds gewonnenen Erkenntnisse lassen sich auf Dichtungseinlagen anwenden, die nicht aus einem homogenen Polymercompound geformt sind, sondern z. B. wie oben beschrieben, einen mehrschichtigen Aufbau haben, wie in Fig. 1 beispielhaft gezeigt.

## Patentansprüche

1. Gefäßverschluss aus Metall oder Kunststoff für ein Gefäß zur Aufnahme von Getränken oder Nahrungsmitteln, das eine mit dem Gefäßverschluss zu verschließende Mündung aufweist, mit einer Dichtungseinlage, die im Gefäßverschluss so angeordnet ist, dass sie die Mündung dichtend verschließt, wenn der Gefäßverschluss am Gefäß angebracht ist,
wobei der Gefäßverschluss einschließlich der Dichtungseinlage keine halogenhaltigen Materialien enthält,
und die Dichtungseinlage wenigstens zwei verschiedene Polymere umfasst, von denen wenigstens eines ein Barrierepolymer mit einer Shore D - Härte von maximal 40 und einer Sauerstoffdurchlässigkeit von maximal 1000 cm³·100 µm/m²·d·bar ist, oder,
ohne Begrenzung der Shore D - Härte, mit einer Sauerstoffdurchlässigkeit von maximal 10 cm³·100 µm/m² · d · bar ist,
wobei die Sauerstoffdurchlässigkeit in Anlehnung an DIN 53380-3, bei 100% Sauerstoffkonzentration, 100% relativer Luftfeuchtigkeit, atmosphärischem Druck und 26°C Messtemperatur bestimmt wird und auf eine Schichtstärke von 100 µm bezogen ist,
**dadurch gekennzeichnet, dass** die Dichtungseinlage wenigstens zwei verschiedene Barrierepolymere umfasst.

2. Gefäßverschluss nach Anspruch 1, **dadurch gekennzeichnet, dass** die Dichtungseinlage wenigstens zwei verschiedene Barrierepolymere im Gemisch miteinander umfasst.

3. Gefäßverschluss nach Anspruch 1, **dadurch gekennzeichnet, dass** die Dichtungseinlage wenigstens zwei verschiedene Barrierepolymere aufweist, die im Wesentlichen miteinander unvermischt sind.

4. Gefäßverschluss nach einem der vorstehenden Ansprüche, **dadurch gekennzeichnet, dass** die Barrierepolymere aus der Gruppe ausgewählt sind, die Butylkautschuk (IIR); Polyisobutylen (PIB); Styrolblockcopolymere, insbesondere Styrol-Isobutylen-Styrol (SIBS), Styrol-Isopren-Styrol (SIS), Styrol-Vinylisopren-Styrol und hydriertes Styrol-Vinylisopren-(co)Isopren-Styrol; Polyamid (PA); Ethylen-Vinylalkohol-Copolymere (EVOH); und thermoplastische Vulkanisate (TPE-V) insbesondere solche mit einem Isobuten-Gehalt von >50% in der Kautschukkomponente umfasst,
wobei vorzugsweise der Gesamtgehalt an Isobutylen-basierten Polymeren in der Dichtungseinlage 60 Gew.%, mehr bevorzugt 55 Gew.% und besonders bevorzugt 50 Gew.% nicht überschreitet.

5. Gefäßverschluss nach einem der vorstehenden Ansprüche, **dadurch gekennzeichnet, dass** die Dichtungseinlage zwei verschiedene Barrierepolymere und zusätzlich wenigstens ein weiteres Polymer umfasst, das kein Barrierepolymer ist.

6. Gefäßverschluss nach Anspruch 5, **dadurch gekennzeichnet, dass** die Dichtungseinlage als weiteres Polymer ein Polyolefin, insbes. Polyethylen und/oder ein Polyethylen-Copolymer,
vorzugsweise PE-HD, PE-LD, PE-LLD, (C₄, C₆ oder C₈) und/oder VLDPE, MD-LDPE, EVA, EEA, EMA, EAA, EBA, Polypropylen und/oder Propylen-Copolymer umfasst.

7. Gefäßverschluss nach einem der vorstehenden Ansprüche, **dadurch gekennzeichnet, dass** die Dichtungseinlage ein TPE, insbes. SBS, SEBS, SIBS, SIS, SEP, SEPS, SEEPS umfasst.

8. Gefäßverschluss nach einem der vorstehenden. Ansprüche, **dadurch gekennzeichnet, dass** die Dichtungseinlage ein Gemisch von Butylkautschuk (IIR) und Styrol-Isobutylen-Styrol (SIBS) enthält.

9. Gefäßverschluss nach Anspruch 8, **dadurch gekennzeichnet, dass** die Dichtungseinlage zusätzlich wenigstens ein Polyolefin enthält.

10. Gefäßverschluss nach einem der vorstehenden Ansprüche, **dadurch gekennzeichnet, dass** die Dichtungseinlage wenigstens einen Zusatzstoff wie einen Weichmacher, etwa Polybuten-, Polyisobutylen- oder Weißöl; ein klebrigkeitsverringerndes Mittel ("anti-blocking agent") und/oder ein Gleitmittel enthält, wobei der Weichmachergehalt vorzugsweise weniger als 70 Gew.%, mehr bevorzugt weniger als 60 Gew.%, noch mehr bevorzugt weniger als 50 Gew.%, besonders bevorzugt weniger als 40 Gew.%, speziell weniger als 30 Gew.%, spezieller weniger als 20 Gew.%, noch spezieller weniger als 10 Gew.%, noch mehr bevorzugt weniger als 5 Gew.%, noch mehr bevorzugt weniger als 1 Gew.% beträgt oder die Dichtungseinlage frei von Weichmachern ist.

11. Gefäßverschluss nach einem der vorstehenden Ansprüche, **dadurch gekennzeichnet, dass** die Dichtungseinlage bis zu 25 Gew.% Butylkautschuk, bis zu 65 Gew.% SIBS und vorzugsweise bis zu 60 Gew.%, mehr bevorzugt bis zu 55 Gew.% und besonders bevorzugt bis zu 50 Gew.% PE-HD, PE-LD und/oder PE-LLD enthält.

12. Gefäßverschluss nach Anspruch 11, **dadurch gekennzeichnet, dass** das enthaltene Polyolefin eine Schmelzflussrate (melt flow rate, MFR bei 5 kg/190°C) oberhalb 1 g/10 min, mehr bevorzugt oberhalb 5 g/10 min, noch mehr bevorzugt oberhalb 10 g/10 min, speziell 15 g/10 min und besonders bevorzugt oberhalb 20 g/10 min aufweist.

13. Gefäßverschluss nach einem der vorstehenden Ansprüche, **dadurch gekennzeichnet, dass** die Dichtungseinlage eine Shore D - Härte von weniger als 50, vorzugsweise weniger als 45, insbesondere weniger als 35 und besonders bevorzugt weniger als 30 hat.

14. Gefäßverschluss nach einem der vorstehenden Ansprüche, **dadurch gekennzeichnet, dass** die Dichtungseinlage eine Shore D - Härte zwischen 15 und 40 hat.

15. Gefäßverschluss nach einem der vorstehenden Ansprüche, **dadurch gekennzeichnet, dass** die Shore A - Härte der Dichtungseinlage zwischen 55 und 100 liegt.

16. Gefäßverschluss nach einem der vorstehenden Ansprüche, **dadurch gekennzeichnet, dass** die Dichtungseinlage eine Sauerstoffdurchlässigkeit unterhalb 940 cm³ · 100 µm/m² · d · bar, insbes. unterhalb 850 cm³ · 100 µm/m² · d · bar, mehr bevorzugt unterhalb 800 cm³ · 100 µm/m² · d · bar , spezieller unterhalb 770 cm³ · 100 µm/m² · d · bar, noch spezieller unterhalb 700 cm³ · 100 µm/m² · d · bar aufweist.

17. Gefäßverschluss nach Anspruch 16, **dadurch gekennzeichnet, dass** die Dichtungseinlage eine Sauerstoffdurchlässigkeit unterhalb 670 cm³ · 100 µm/m² · d · bar, spezieller unterhalb 630 cm³· 100 µm/m² · d · bar, bevorzugt unterhalb 600 cm³ · 100 µm/m² · d · bar und besonders bevorzugt unterhalb 560 cm³ · 100 µm/m² · d · bar aufweist.

18. Gefäßverschluss nach einem der vorstehenden Ansprüche, **dadurch gekennzeichnet, dass** die Dichtungseinlage eine Schmelzflußrate (melt flow rate, MFR) bei 5 kg Belastung und 190°C von mindestens 1 g/10 min, vorzugsweise mindestens 5 g/10 min, mehr bevorzugt von mindestens 10 g/10 min und besonders bevorzugt mindestens 15 g/10 min aufweist.

19. Gefäßverschluss nach einem der vorstehenden Ansprüche, **dadurch gekennzeichnet, dass** die Dichtungseinlage einen Druckverformungsrest (DVR) bei 25% Kompression, 23°C und 22 h Lagerung zwischen 20% und 70%, insbes. zwischen 40% und 65% hat.

20. Gefäßverschluss nach einem der vorstehenden Ansprüche, **dadurch gekennzeichnet, dass** die Dichtungseinlage einen DVR bei 25% Kompression, 40°C und 22 h Lagerung zwischen 45% und 70% hat.

21. Gefäßverschluss nach einem der vorstehenden Ansprüche, **dadurch gekennzeichnet, dass** die Dichtungseinlage einen DVR bei 25% Kompression, 70°C und 22 h Lagerung zwischen 50% und 80% hat.

22. Gefäßverschluss nach einem der vorstehenden Ansprüche, **dadurch gekennzeichnet, dass** die Dichtungseinlage eine Sauerstoffdurchlässigkeit unterhalb 700 cm³ · 100 µm/m² · d · bar bei einem DVR (23°C, 22 h Lagerung, 25% Kompression) zwischen 40% und 65% und vorzugsweise einer Schmelzflussrate von mehr als 1 g/10 min, insb. mehr als 5 g/10 min, besonders bevorzugt mehr als 10 g/10 min, bei 5 kg Belastung und 190°C hat.

23. Gefäßverschluss nach Anspruch 22, **dadurch gekennzeichnet, dass** die Dichtungseinlage Butylkautschuk, SIBS und wenigstens ein Polyolefin, vorzugsweise in den Gehaltsbereichen gemäß Anspruch 11, enthält.

24. Gefäßverschluss nach einem der vorstehenden Ansprüche, **dadurch gekennzeichnet, dass** der Gefäßverschluss eine Schraubkappe, insb. eine Aluminium-Schraubkappe mit einem Durchmesser von 28 mm, 30 mm oder 38 mm, oder ein Aluminium-Aufreißverschluss oder ein Kronkork, insbes. mit einer Blechdicke von weniger als 0.21 mm, ist.

25. Gefäßverschluss nach einem der vorstehenden Ansprüche, **dadurch gekennzeichnet, dass** die Dichtungseinlage, insbesondere bei Temperaturen im Bereich von 62°C bis 70°C, pasteurisierbar ist.

26. Gefäßverschluss nach einem der vorstehenden Ansprüche, **dadurch gekennzeichnet, dass** die Dichtungseinlage als Ring oder Scheibe ausgebildet ist und eine umlaufende, im angebrachten Zustand des Gefäßverschlusses in Richtung zur Gefäßmündung vortretende Dichtungslippe aufweist.

27. Gefäßverschluss nach einem der vorstehenden Ansprüche, **dadurch gekennzeichnet, dass** die Dichtungseinlage aus zwei unterschiedlichen Elementen ausgebildet ist, von denen das eine ein ring- oder (vorzugsweise) scheibenförmiges erstes Element ist, das vorzugsweise mit dem Metall- oder Kunststoffmaterial des Verschlusskörpers verbunden ist, und das andere ein (vorzugsweise) ring- oder scheibenförmiges zweites Element ist, das auf dem ersten Element wenigstens in dem Bereich angeordnet ist, in welchem der angebrachte Gefäßverschluss die Gefäßmündung kontaktiert.

28. Gefäßverschluss nach Anspruch 27, **dadurch gekennzeichnet, dass** das erste und das zweite Element aus unterschiedlichen Materialien bestehen, und das Material des zweiten Elements wenigstens ein Barrierepolymer, vorzugsweise wenigstens zwei Barrierepolymere, umfasst.

29. Gefäßverschluss nach einem der Ansprüche 1 bis 26, **dadurch gekennzeichnet, dass** die Dichtungseinlage aus zwei unterschiedlichen Materialien ausgebildet ist, von denen das erste Material ein scheibenförmiges Element bildet, das sandwichartig zwischen Schichten des zweiten Materials liegt, wobei das zweite Material ein Compound mit wenigstens einem Barrierepolymer und einer Shore D - Härte von weniger als 40 ist und das erste Material ein Compound oder ein reines Polymer mit einer größeren Härte als Shore D 40 ist.

30. Gefäßverschluss nach Anspruch 29, **dadurch gekennzeichnet, dass** das erste Material ein Barrierepolymer umfasst, welches vorzugsweise ausgewählt ist aus Ethylen-Vinylalkohol-Copolymer (EVOH) und (ggf. modifiziertem) Polyamid (PA).

31. Gefäßverschluss nach einem der vorstehenden Ansprüche, **dadurch gekennzeichnet, dass** die Dichtungseinlage eine Sauerstoff-bindende Verbindung ("Scavenger"), insbesondere Natriumsulfit, enthält.

32. Gefäßverschluss nach einem der vorstehenden Ansprüche, mit einer Dichtungseinlage, die mit einer Metallfolie versehen, insbes. kaschiert ist.

33. Gefäßverschluss nach einem der vorstehenden Ansprüche, mit einer Dichtungseinlage, die ein geschäumtes Polymercompound umfasst.

34. Polymercompound, das keine halogenhaltigen Materialien enthält, und wenigstens zwei verschiedene Polymere umfasst, von denen wenigstens eines ein Barrierepolymer mit einer Shore D - Härte von maximal 40 und einer Sauerstoffdurchlässigkeit von maximal 1000 cm³ · 100 µm/m²·d·bar ist, oder, ohne Begrenzung der Shore D - Härte, mit einer Sauerstoffdurchlässigkeit von maximal 10 cm³·100 µm/m² · d · bar ist,
wobei die Sauerstoffdurchlässigkeit in Anlehnung an DIN 53380-3, bei 100% Sauerstoffkonzentration, 100 % relativer Luftfeuchtigkeit, atmosphärischem Druck und 26°C Meßtemperatur bestimmt wird und auf eine Schichtstärke von 100 µm bezogen ist, **dadurch gekennzeichnet, dass** das Polymercompound wenigstens zwei verschiedene Barrierepolymere umfasst.

35. Polymercompound nach Anspruch 34, **dadurch gekennzeichnet, dass** das Polymercompound wenigstens zwei Barrierepolymere umfasst, die sich wenigstens in einem physikalischen Parameter unterscheiden.

36. Polymercompound nach Anspruch 34 oder 35, **dadurch gekennzeichnet, dass** die Barrierepolymere verschiedenen Stoffklassen zugehören.

37. Polymercompound nach einem der vorstehenden Ansprüche, **dadurch gekennzeichnet, dass** wenigstens eines, vorzugsweise wenigstens zwei der Barrierepolymere thermoplastische Elastomere sind.

38. Polymercompound nach einem der vorstehenden Ansprüche, **dadurch gekennzeichnet, dass** wenigstens eines, vorzugsweise wenigstens zwei der Barrierepolymere ausgewählt sind aus der Gruppe, die Butylkautschuk (IIR); Polyisobutylen (PIB); Styrolblockcopolymere, insbesondere Styrol-Isobutylen-Styrol (SIBS), Styrol-Isopren-Styrol (SIS), Styrol-Vinylisopren-Styrol und hydriertes Styrol-Vinylisopren-(co)Isopren-Styrol; Polyamid (PA); Ethylen-Vinylalkohol-Copolymere (EVOH); und thermoplastische Vulkanisate (TPE-V) insbesondere solche mit einem Isobuten-Gehalt von >50% in der Kautschukkomponente umfasst,
wobei vorzugsweise der Gesamtgehalt an Isobuten-basierten Polymeren in der Dichtungseinlage 60 Gew.%, mehr bevorzugt 55 Gew.% und besonders bevorzugt 50 Gew.% nicht überschreitet, umfasst.

39. Polymercompound nach einem der vorstehenden Ansprüche, **dadurch gekennzeichnet, dass** das Polymercompound wenigstens ein weiteres Polymer umfasst, das kein Barrierepolymer ist.

40. Polymercompound nach Anspruch 39, **dadurch gekennzeichnet, dass** das weitere Polymer ein Polyolefin, insbes. ein Polyethylen und/oder ein Polyethylen-Copolymer, vorzugsweise PE-HD, PE-LD, PE-LLD, (C₄, C₆ oder C₈) und/oder VLDPE, MD-LDPE, EVA, EEA, EMA, EAA, EBA, Polypropylen und/oder Propylen-Copolymer umfasst.

41. Polymercompound nach einem der vorstehenden Ansprüche, **dadurch gekennzeichnet, dass** das Polymercompound ein TPE, insbes. SBS, SEBS, SIBS, SIS, SEP, SEPS, SEEPS umfasst.

42. Polymercompound nach einem der vorstehenden Ansprüche, **dadurch gekennzeichnet, dass** das Polymercompound Butylkautschuk (IIR) und Styrol-Isobutylen-Styrol (SIBS) und vorzugsweise ein Polyolefin sowie ggf. Weichmacher ein klebrigkeitsverringerndes Mittel ("anti-blocking agent") und/oder ein Gleitmittel enthält.

43. Polymercompound nach einem der vorstehenden Ansprüche, **dadurch gekennzeichnet, dass** das Polymercompound bis zu 25 Gew.% Butylkautschuk (IIR), bis zu 65 Gew.% Styrol-Isobutylenen-Styrol (SIBS) und vorzugsweise bis zu 60 Gew.%, mehr bevorzugt bis zu 55 Gew.% und besonders bevorzugt bis zu 50 Gew.% Polyolefin, insbesondere PE-HD, PE-LD und/oder PE-LLD enthält.

44. Polymercompound nach einem der vorstehenden Ansprüche, **dadurch gekennzeichnet, dass** der Gesamtgehalt an Barrierepolymeren im Polymercompound 60 Gew.%, vorzugsweise 55 Gew.% und besonders bevorzugt 50 Gew.% nicht überschreitet.

45. Polymercompound nach einem der vorstehenden Ansprüche, **dadurch gekennzeichnet, dass** das Polymercompound eine Schmelzflussrate (melt flow rate, MFR) bei 5 kg Belastung und 190°C oberhalb 5 g/10 min, vorzugsweise oberhalb 15 g/10 min, besonders bevorzugt von wenigstens 20 g/10 min; eine Shore D - Härte von weniger als 50, vorzugsweise weniger als 40 und besonders bevorzugt weniger als 30; eine Sauerstoffdurchlässigkeit unterhalb 940 cm³ · 100 µm/m² · d · bar, insbes. unterhalb 850 cm³ · 100 µm/m² · d · bar, mehr bevorzugt unterhalb 800 cm³ · 100 µm/m² · d · bar, noch mehr bevorzugt unterhalb 770 cm³ · 100 µm/m² · d · bar, spezieller unterhalb 670 cm³ · 100 µm/m² · d · bar, noch spezieller unterhalb 630 cm³· 100 µm/m² · d · bar, besser unterhalb 600 cm³· 100 µm/m² · d · bar und meist bevorzugt unterhalb 560 cm³ · 100 µm/m² · d · bar; und/oder einen DVR bei 25% Kompression, 23°C und 22 h Lagerung zwischen 30% und 70%, vorzugsweise zwischen 40% und 65% aufweist.

46. Polymercompound nach Anspruch 42, **dadurch gekennzeichnet, dass** das Polymercompound bei einem DVR (25% Kompression, 23°C, 22h Lagerung) zwischen 40% und 65% eine Sauerstoffdurchlässigkeit unterhalb 700 cm³ · 100 µm/m² · d · bar und eine Schmelzflussrate (melt flow rate MFR) bei 5 kg Belastung bei 190°C oberhalb 1 g/10 min, insbes. oberhalb 5 g/10 min und speziell oberhalb 10 g/10 min hat.

47. Polymercompound nach einem der vorstehenden Ansprüche, mit wenigstens einem Barrierepolymer mit einer Sauerstoffdurchlässigkeit von max. 900 cm³·100µm/m²·d·bar, mehr bevorzugt von max. 800 cm³·100µm/m²·d·bar, spezieller bevorzugt von max. 700 cm³·100µm/m²·d·bar, und noch mehr bevorzugt von max. 600 cm³·100µm/m²·d·bar, wenn die Shore D - Härte des Barrierepolymers nicht größer ist als 40 , bzw. bei einer beliebigen Shore D - Härte mit einer Sauerstoffdurchlässigkeit von max. 8 cm³·100µm/m²·d·bar, noch mehr bevorzugt von max. 6 cm³·100µm/m²·d·bar.

48. Verwendung eines Gefäßverschlusses nach einem der Ansprüche 1 bis 30 zum Verschluss einer Wein-, Sekt-, Bier-, Softdrink-, Spirituosen- oder Champagnerflasche.

49. Verwendung eines Polymercompounds gemäß einem der Ansprüche 34 bis 47, das wenigstens ein Barrierepolymer umfasst, als Dichtungseinlage in einem Verschluss, insbes. einer Schraubkappe und speziell einer Aluminium-Schraubkappe mit einem Durchmesser von 28 mm, 30 mm oder 38 mm, oder in einem Kronkork mit einer Blechdicke von weniger als 0.21 mm, vorzugsweise von weniger als 0.20 mm und besonders bevorzugt von weniger als 0.18 mm für eine Wein-, Sekt- Bier-, Softdrink-, Spirituosen- oder Champagnerflasche

50. Verwendung nach Anspruch 49, **dadurch gekennzeichnet, dass** das Polymercompound ein Barrierepolymer, insbes. Butylkautschuk (IIR) oder Styrol-Isobutylen-Styrol (SIBS) sowie wenigstens ein Polyolefin, insbes. PE-HD umfasst.

51. Verwendung nach Anspruch 49 oder 50, **dadurch gekennzeichnet, dass** die Dichtungseinlage eine Shore D - Härte zwischen 15 und 45, und eine Sauerstoffdurchlässigkeit unterhalb 1000 cm³ · 100 µm/m² · d · bar, insbesondere unterhalb 600 cm³ · 100 µm/m² · d · bar und spezieller unterhalb 500 cm³ · 100 µm/m² · d · bar aufweist.

52. Verwendung nach einem der Ansprüche 32 bis 34, **dadurch gekennzeichnet, dass** die Dichtungseinlage eine Schmelzflussrate (melt flow rate, MFR, bei 5 kg Belastung und 190°C) von wenigstens 10 g/10 min, vorzugsweise wenigstens 15 g/10 min hat.

53. Dichtungseinlage für einen Gefäßverschluss gemäß einem der Ansprüche 1 bis 33, als vorgefertigte Scheibe zur Einlage in den Gefäßverschluss.

54. Dichtungseinlage gemäß Anspruch 53, in Form eines Spritzgussteils.

## Claims

1. Container closure made of metal or synthetic material for a container for receiving beverages or foodstuffs, which has a mouth to be closed by the container closure, with a sealing insert which is disposed in the container closure such that it closes the mouth in a sealed manner when the container closure is fitted onto the container,
wherein the container closure, including the sealing insert, contains no halogen-containing materials,
and the sealing insert comprises at least two different polymers, at least one of which is a barrier polymer with a Shore D hardness of at most 40 and an oxygen permeability of at most 1000 cm³·100 µm/m²·d·bar, or,
without limitation of the Shore D hardness, with an oxygen permeability of at most 10 cm³·100 µm/m²·d·bar,
wherein the oxygen permeability is determined in accordance with DIN 53380-3, at an oxygen concentration of 100%, relative humidity of 100%, atmospheric pressure and a measuring temperature of 26°C and is relative to a layer thickness of 100 µm, **characterised in that** the sealing insert comprises at least two different barrier polymers.

2. Container closure as claimed in claim 1, **characterised in that** the sealing insert comprises at least two different barrier polymers mixed with one another.

3. Container closure as claimed in claim 1, **characterised in that** the sealing insert has at least two different barrier polymers which are substantially not mixed with one another.

4. Container closure as claimed in any one of the preceding claims, **characterised in that** the barrier polymers are selected from the group comprising butyl rubber (IIR); polyisobutylene (PIB); styrene block copolymers, in particular styrene isobutylene styrene (SIBS), styrene isoprene styrene (SIS), styrene vinyl isoprene styrene and hydrogenated styrene vinylisoprene (co)isoprene styrene; polyamide (PA); ethylene vinyl alcohol copolymers (EVOH); and thermoplastic material vulcanizates (TPE-V), in particular such polymers having an isobutene content of >50% in the rubber component,
wherein preferably the total content of isobutylene-based polymers in the sealing insert does not exceed 60 wt.%, more preferably 55 wt.% and particularly preferably 50 wt.%.

5. Container closure as claimed in any one of the preceding claims, **characterised in that** the sealing insert comprises two different barrier polymers and additionally at least one further polymer which is not a barrier polymer.

6. Container closure as claimed in claim 5, **characterised in that**, as the further polymer, the sealing insert comprises a polyolefin, in particular polyethylene and/or a polyethylene copolymer,
preferably PE-HD, PE-LD, PE-LLD, (C₄, C₆ or C₈) and/or VLDPE, MD-LDPE, EVA, EEA, EMA, EAA, EBA, polypropylene and/or propylene copolymer.

7. Container closure as claimed in any one of the preceding claims, **characterised in that** the sealing insert comprises a TPE, in particular SBS, SEBS, SIBS, SIS, SEP, SEPS, SEEPS.

8. Container closure as claimed in any one of the preceding claims, **characterised in that** the sealing insert contains a mixture of butyl rubber (IIR) and styrene isobutylene styrene (SIBS).

9. Container closure as claimed in claim 8, **characterised in that** the sealing insert additionally contains at least one polyolefin.

10. Container closure as claimed in any one of the preceding claims, **characterised in that** the sealing insert contains at least one additive such as a softener, for instance polybutene oil, polyisobutene oil or white oil; a stickiness-reducing agent (anti-blocking agent) and/or a lubricant, wherein the softener content is preferably less than 70 wt.%, more preferably less than 60 wt.%, still more preferably less than 50 wt.%, particularly preferably less than 40 wt.%, especially less than 30 wt.%, more especially less than 20 wt.%, still more especially less than 10 wt.%, still more preferably less than 5 wt.%, still more preferably less than 1 wt.% or the sealing insert is free of softeners.

11. Container closure as claimed in any one of the preceding claims, **characterised in that** the sealing insert contains up to 25 wt.% butyl rubber, up to 65 wt.% SIBS and preferably up to 60 wt.%, more preferably up to 55 wt.% and particularly preferably up to 50 wt.% PE-HD, PE-LD and/or PE-LLD.

12. Container closure as claimed in claim 11, **characterised in that** the contained polyolefin has a melt flow rate (MFR at 5 kg/190°C) above 1 g/10 min, more preferably above 5 g/10 min, still more preferably above 10 g/10 min, especially 15 g/10 min and particularly preferably above 20 g/10 min.

13. Container closure as claimed in any one of the preceding claims, **characterised in that** the sealing insert has a Shore D hardness of less than 50, preferably less than 45, in particular less than 35 and particularly preferably less than 30.

14. Container closure as claimed in any one of the preceding claims, **characterised in that** the sealing insert has a Shore D hardness of between 15 and 40.

15. Container closure as claimed in any one of the preceding claims, **characterised in that** the Shore A hardness of the sealing insert is between 55 and 100.

16. Container closure as claimed in any one of the preceding claims, **characterised in that** the sealing insert has an oxygen permeability below 940 cm³·100 µm/m²·d·bar, in particular below 850 cm³·100 µm/m²·d·bar, more preferably below 800 cm³·100 µm/m²·d·bar, especially below 770 cm³·100 µm/m²·d·bar, more especially below 700 cm³·100 µm/m²·d·bar.

17. Container closure as claimed in claim 16, **characterised in that** the sealing insert has an oxygen permeability below 670 cm³·100 µm/m²·d·bar, especially below 630 cm³·100 µm/m²·d·bar, preferably below 600 cm³·100 µm/m²·d·bar and particularly preferably below 560 cm³·100 µm/m²·d·bar.

18. Container closure as claimed in any one of the preceding claims, **characterised in that** the sealing insert has a melt flow rate (MFR) with 5 kg loading and at 190°C of at least 1 g/10 min, preferably at least 5 g/10 min, more preferably of at least 10 g/10 min and particularly preferably at least 15 g/10 min.

19. Container closure as claimed in any one of the preceding claims, **characterised in that** the sealing insert has a compression set (CS) at 25% compression, 23°C and 22 hour storage of between 20% and 70%, in particular between 40% and 65%.

20. Container closure as claimed in any one of the preceding claims, **characterised in that** the sealing insert has a CS at 25% compression, 40°C and 22 hour storage of between 45% and 70%.

21. Container closure as claimed in any one of the preceding claims, **characterised in that** the sealing insert has a CS at 25% compression, 70°C and 22 hour storage of between 50% and 80%.

22. Container closure as claimed in any one of the preceding claims, **characterised in that** the sealing insert has an oxygen permeability below 700 cm³·100 µm/m²·d·bar at a CS (23°C, 22 hour storage, 25% compression) of between 40% and 65% and preferably a melt flow rate of more than 1 g/10 min, in particular more than 5 g/10 min, particularly preferably more than 10 g/10 min, with 5 kg loading and at 190°C.

23. Container closure as claimed in claim 22, **characterised in that** the sealing insert contains butyl rubber, SIBS and at least one polyolefin, preferably in the content ranges as claimed in claim 11.

24. Container closure as claimed in any one of the preceding claims, **characterised in that** the container closure is a screw cap, in particular an aluminium screw cap with a diameter of 28 mm, 30 mm or 38 mm, or an aluminium tear-off closure or a crown cap, in particular with a sheet metal thickness of less than 0.21 mm.

25. Container closure as claimed in any one of the preceding claims, **characterised in that** the sealing insert is pasteurisable, in particular at temperatures in the range of 62° to 70°C.

26. Container closure as claimed in any one of the preceding claims, **characterised in that** the sealing insert is designed as a ring or disc and has a circumferential sealing lip which protrudes in the direction of the container mouth when the container closure is in the attached state.

27. Container closure as claimed in any one of the preceding claims, **characterised in that** the sealing insert is formed from two different elements, of which one is a ring-shaped or (preferably) disc-shaped first element which is preferably connected to the metal or synthetic material of the closure body, and the other is a (preferably) ring-shaped or disc-shaped second element which is disposed on the first element at least in the region in which the attached container closure contacts the container mouth.

28. Container closure as claimed in claim 27, **characterised in that** the first and the second elements consist of different materials, and the material of the second element comprises at least one barrier polymer, preferably at least two barrier polymers.

29. Container closure as claimed in any one of claims 1 to 26, **characterised in that** the sealing insert is formed from two different materials, of which the first material forms a disc-shaped element which is sandwiched between layers of the second material, wherein the second material is a compound with at least one barrier polymer and a Shore D hardness of less than 40 and the first material is a compound or a pure polymer with a hardness greater than Shore D 40.

30. Container closure as claimed in claim 29, **characterised in that** the first material comprises a barrier polymer which is preferably selected from ethylene vinyl alcohol copolymer (EVOH) and (optionally modified) polyamide (PA).

31. Container closure as claimed in any one of the preceding claims, **characterised in that** the sealing insert contains an oxygen-binding compound ("scavenger"), in particular sodium sulphite.

32. Container closure as claimed in any one of the preceding claims, having a sealing insert which is provided with a metal foil, in particular is foil-clad.

33. Container closure as claimed in any one of the preceding claims, having a sealing insert which comprises a foamed polymer compound.

34. Polymer compound which contains no halogen-containing materials and comprises at least two different polymers, of which at least one is a barrier polymer with a Shore D hardness of at most 40 and an oxygen permeability of at most 1000 cm³·100 µm/m²·d·bar, or, without limitation of the Shore D hardness, with an oxygen permeability of at most 10 cm³·100 µm/m²·d·bar,
wherein the oxygen permeability is determined in accordance with DIN 53380-3, at an oxygen concentration of 100%, relative humidity of 100%, atmospheric pressure, and a measuring temperature of 26°C and is relative to a layer thickness of 100 µm, **characterised in that** the polymer compound comprises at least two different barrier polymers.

35. Polymer compound as claimed in claim 34, **characterised in that** the polymer compound comprises at least two barrier polymers which differ at least in one physical parameter.

36. Polymer compound as claimed in claim 34 or 35, **characterised in that** the barrier polymers belong to different substance classes.

37. Polymer compound as claimed in any one of the preceding claims, **characterised in that** at least one, preferably at least two, of the barrier polymers is/are (a) thermoplastic elastomer(s).

38. Polymer compound as claimed in any one of the preceding claims, **characterised in that** at least one, preferably at least two, of the barrier polymers is/are selected from the group comprising butyl rubber (IIR); polyisobutylene (PIB); styrene block copolymers, in particular styrene isobutylene styrene (SIBS), styrene isoprene styrene (SIS), styrene vinyl isoprene styrene and hydrogenated styrene vinylisoprene (co)isoprene styrene; polyamide (PA); ethylene vinyl alcohol copolymers (EVOH); and thermoplastic material vulcanizates (TPE-V), in particular such polymers having an isobutene content of >50% in the rubber component,
wherein the total content of isobutene-based polymers in the sealing insert preferably does not exceed 60 wt.%, more preferably 55 wt.% and particularly preferably 50 wt.%.

39. Polymer compound as claimed in any one of the preceding claims, **characterised in that** the polymer compound comprises at least one further polymer which is not a barrier polymer.

40. Polymer compound as claimed in claim 39, **characterised in that** the further polymer comprises a polyolefin, in particular a polyethylene and/or a polyethylene copolymer, preferably PE-HD, PE-LD, PE-LLD, (C₄, C₆ or C₈) and/or VLDPE, MD-LDPE, EVA, EEA, EMA, EAA, EBA, polypropylene and/or propylene copolymer.

41. Polymer compound as claimed in any one of the preceding claims, **characterised in that** the polymer compound comprises a TPE, in particular SBS, SEBS, SIBS, SIS, SEP, SEPS, SEEPS.

42. Polymer compound as claimed in any one of the preceding claims, **characterised in that** the polymer compound contains butyl rubber (IIR), styrene isobutylene styrene (SIBS), and preferably a polyolefin, as well as optionally a softener, a stickiness-reducing agent (anti-blocking agent) and/or a lubricant.

43. Polymer compound as claimed in any one of the preceding claims, **characterised in that** the polymer compound contains up to 25 wt.% butyl rubber (IIR), up to 65 wt.% styrene isobutylene styrene (SIBS) and preferably up to 60 wt.%, more preferably up to 55 wt.% and particularly preferably up to 50 wt.% polyolefin, in particular PE-HD, PE-LD and/or PE-LLD.

44. Polymer compound as claimed in any one of the preceding claims, **characterised in that** the total content of barrier polymers in the polymer compound does not exceed 60 wt.%, preferably 55 wt.% and particularly preferably 50 wt.%.

45. Polymer compound as claimed in any one of the preceding claims, **characterised in that** the polymer compound has a melt flow rate (MFR) with 5 kg loading and at 190°C above 5 g/10 min, preferably above 15 g/10 min, particularly preferably of at least 20 g/10 min; a Shore D hardness of less than 50, preferably less than 40 and particularly preferably less than 30; an oxygen permeability below 940 cm³·100 µm/m²·d·bar, in particular below 850 cm³·100 µm/m²·d·bar, more preferably below 800 cm³·100 µm/m²·d·bar, still more preferably below 770 cm³·100 µm/m²·d·bar, especially below 670 cm³·100 µm/m²·d·bar, still more especially below 630 cm³·100 µm/m²·d·bar, more satisfactorily below 600 cm³·100 µm/m²·d·bar and most preferably below 560 cm³·100 µm/m²·d·bar; and/or a CS at 25% compression, 23°C and 22 hour storage between 30% and 70%, preferably between 40% and 65%.

46. Polymer compound as claimed in claim 42, **characterised in that** the polymer compound, at a CS (25% compression, 23°C, 22 hour storage) between 40% and 65%, has an oxygen permeability below 700 cm³·100 µm/m²·d·bar and a melt flow rate (MFR) with 5 kg loading at 190°C above 1 g/10 min, in particular above 5 g/10 min and especially above 10 g/10 min.

47. Polymer compound as claimed in any one of the preceding claims, having at least one barrier polymer with an oxygen permeability of at most 900 cm³·100 µm/m²·d·bar, more preferably at most 800 cm³·100 µm/m²·d·bar, especially preferably at most 700 cm³·100 µm/m²·d·bar and still more preferably at most 600 cm³·100 µm/m²·d·bar, if the Shore D hardness of the barrier polymer is not greater than 40, or at any Shore D hardness with an oxygen permeability of at most 8 cm³·100 µm/m²·d·bar, still more preferably at most 6 cm³·100 µm/m²·d·bar.

48. Use of a container closure as claimed in any one of claims 1 to 30 to close a bottle of wine, sparkling wine, beer, soft drink, spirit or champagne.

49. Use of a polymer compound as claimed in any one of claims 34 to 47, which comprises at least one barrier polymer, as a sealing insert in a closure, in particular a screw cap and especially an aluminium screw cap with a diameter of 28 mm, 30 mm or 38 mm, or in a crown cap with a sheet metal thickness of less than 0.21 mm, preferably less than 0.20 mm and particularly preferably less than 0.18 mm for a bottle of wine, sparkling wine, beer, soft drink, spirit or champagne.

50. Use as claimed in claim 49, **characterised in that** the polymer compound comprises a barrier polymer, in particular butyl rubber (IIR) or styrene-isobutylene-styrene (SIBS), and at least one polyolefin, in particular PE-HD.

51. Use as claimed in claim 49 or 50, **characterised in that** the sealing insert has a Shore D hardness between 15 and 45 and an oxygen permeability below 1000 cm³·100 µm/m²·d·bar, in particular below 600 cm³·100 µm/m²·d·bar and especially below 500 cm³·100 µm/m²·d·bar.

52. Use as claimed in any one of claims 32 to 34, **characterised in that** the sealing insert has a melt flow rate (MFR with 5 kg loading and at 190°C) of at least 10 g/10 min, preferably at least 15 g/10 min.

53. Sealing insert for a container closure as claimed in any one of claims 1 to 33, as a prefabricated disc for insertion into the container closure.

54. Sealing insert as claimed in claim 53 in the form of an injection moulded part.

## Revendications

1. Dispositif de fermeture d'un récipient en métal ou en matière plastique pour un récipient destiné à la réception de boissons ou de denrées alimentaires, qui comprend un orifice destiné à être fermé par le dispositif de fermeture d'un récipient, comprenant une garniture d'étanchéité, qui est agencée dans le dispositif de fermeture d'un récipient de manière à fermer de manière étanche l'orifice lorsque le dispositif de fermeture d'un récipient est monté sur le récipient,
le dispositif de fermeture d'un récipient, y compris la garniture d'étanchéité, ne contenant aucun matériau halogéné,
et la garniture d'étanchéité comprenant au moins deux polymères différents, dont au moins un est un polymère formant une barrière ayant une dureté Shore D d'au plus 40 et une perméabilité à l'oxygène d'au plus 1 000 cm³·100 µm/m²·j·bar, ou
sans limitation de la dureté Shore D, ayant une perméabilité à l'oxygène d'au plus 10 cm³·100 µm/m²·j·bar,
la perméabilité à l'oxygène étant déterminée selon la norme DIN 53380-3 à une concentration en oxygène de 100 %, 100 % d'humidité relative de l'air, sous pression atmosphérique et à une température de mesure de 26 °C, et étant fondée sur une épaisseur de couche de 100 µm,
**caractérisé en ce que** la garniture d'étanchéité comprend au moins deux polymères formant une barrière différents.

2. Dispositif de fermeture d'un récipient selon la revendication 1, **caractérisé en ce que** la garniture d'étanchéité comprend au moins deux polymères formant une barrière différents en mélange les uns avec les autres.

3. Dispositif de fermeture d'un récipient selon la revendication 1, **caractérisé en ce que** la garniture d'étanchéité comprend au moins deux polymères formant une barrière différents, qui sont essentiellement non mélangés les uns avec les autres.

4. Dispositif de fermeture d'un récipient selon l'une quelconque des revendications précédentes, **caractérisé en ce que** les polymères formant une barrière sont choisis dans le groupe qui comprend le caoutchouc de butyle (IIR) ; le polyisobutylène (PIB) ; les copolymères séquencés de styrène, notamment le styrène-isobutylène-styrène (SIBS), le styrène-isoprène-styrène (SIS), le styrène-vinylisoprène-styrène et le styrène-vinylisoprène-(co)isoprène-styrène hydrogéné ; le polyamide (PA) ; les copolymères d'éthylène-alcool vinylique (EVOH) ; et les vulcanisats thermoplastiques (TPE-V), notamment ceux ayant une teneur en isobutène > 50 % dans le composant caoutchouc,
la teneur totale en polymères à base d'isobutylène dans la garniture d'étanchéité ne dépassant de préférence pas 60 % en poids, de manière davantage préférée 55 % en poids et de manière particulièrement préférée 50 % en poids.

5. Dispositif de fermeture d'un récipient selon l'une quelconque des revendications précédentes, **caractérisé en ce que** la garniture d'étanchéité comprend deux polymères formant une barrière différents et comprend en outre au moins un polymère supplémentaire, qui n'est pas un polymère formant une barrière.

6. Dispositif de fermeture d'un récipient selon la revendication 5, **caractérisé en ce que** la garniture d'étanchéité comprend en tant que polymère supplémentaire une polyoléfine, notamment un polyéthylène et/ou un copolymère de polyéthylène,
de préférence le PE-HD, le PE-LD, le PE-LLD, (C₄, C₆ ou C₈) et/ou le VLDPE, le MD-LDPE, l'EVA, l'EEA, l'EMA, l'EAA, l'EBA, le polypropylène et/ou un copolymère de propylène.

7. Dispositif de fermeture d'un récipient selon l'une quelconque des revendications précédentes, **caractérisé en ce que** la garniture d'étanchéité comprend un TPE, notamment le SBS, le SEBS, le SIBS, le SIS, le SEP, le SEPS, le SEEPS.

8. Dispositif de fermeture d'un récipient selon l'une quelconque des revendications précédentes, **caractérisé en ce que** la garniture d'étanchéité contient un mélange de caoutchouc de butyle (IIR) et de styrène-isobutylène-styrène (SIBS).

9. Dispositif de fermeture d'un récipient selon la revendication 8, **caractérisé en ce que** la garniture d'étanchéité contient en outre au moins une polyoléfine.

10. Dispositif de fermeture d'un récipient selon l'une quelconque des revendications précédentes, **caractérisé en ce que** la garniture d'étanchéité contient au moins un additif, tel qu'un plastifiant, par exemple l'huile de polybutène, de polyisobutylène ou blanche ; un agent réduisant l'adhésivité (« anti-blocking agent ») et/ou un agent lubrifiant, la teneur en plastifiants étant de préférence inférieure à 70 % en poids, de manière davantage préférée inférieure à 60 % en poids, de manière encore davantage préférée inférieure à 50 % en poids, de manière particulièrement préférée inférieure à 40 % en poids, spécialement inférieure à 30 % en poids, plus spécialement inférieure à 20 % en poids, encore plus spécialement inférieure à 10 % en poids, de manière encore davantage préférée inférieure à 5 % en poids, de manière encore davantage préférée inférieure à 1 % en poids, ou la garniture d'étanchéité étant exempte de plastifiants.

11. Dispositif de fermeture d'un récipient selon l'une quelconque des revendications précédentes, **caractérisé en ce que** la garniture d'étanchéité contient jusqu'à 25 % en poids de caoutchouc de butyle, jusqu'à 65 % en poids de SIBS et de préférence jusqu'à 60 % en poids, de manière davantage préférée jusqu'à 55 % en poids et de manière particulièrement préférée jusqu'à 50 % en poids de PE-HD, PE-LD et/ou PE-LLD.

12. Dispositif de fermeture d'un récipient selon la revendication 11, **caractérisé en ce que** la polyoléfine contenue présente un indice de fluidité à chaud (melt flow rate, MFR à 5 kg/190 °C) supérieur à 1 g/10 minutes, de manière davantage préférée supérieur à 5 g/10 minutes, de manière encore davantage préférée supérieur à 10 g/10 minutes, spécialement 15 g/10 minutes et de manière particulièrement préférée supérieur à 20 g/10 minutes.

13. Dispositif de fermeture d'un récipient selon l'une quelconque des revendications précédentes, **caractérisé en ce que** la garniture d'étanchéité présente une dureté Shore D inférieure à 50, de préférence inférieure à 45, notamment inférieure à 35 et de manière particulièrement préférée inférieure à 30.

14. Dispositif de fermeture d'un récipient selon l'une quelconque des revendications précédentes, **caractérisé en ce que** la garniture d'étanchéité présente une dureté Shore D comprise entre 15 et 40.

15. Dispositif de fermeture d'un récipient selon l'une quelconque des revendications précédentes, **caractérisé en ce que** la dureté Shore A de la garniture d'étanchéité est comprise entre 55 et 100.

16. Dispositif de fermeture d'un récipient selon l'une quelconque des revendications précédentes, **caractérisé en ce que** la garniture d'étanchéité présente une perméabilité à l'oxygène inférieure à 940 cm³·100 µm/m²·j·bar, notamment inférieure à 850 cm³·100 µm/m²·j·bar, de manière davantage préférée inférieure à 800 cm³·100 µm/m²·j·bar, plus spécialement inférieure à 770 cm³·100 µm/m²·j·bar, encore plus spécialement inférieure à 700 cm³·100 µm/m²·j·bar.

17. Dispositif de fermeture d'un récipient selon la revendication 16, **caractérisé en ce que** la garniture d'étanchéité présente une perméabilité à l'oxygène inférieure à 670 cm³·100 µm/m²·j·bar, plus spécialement inférieure à 630 cm³·100 µm/m²·j·bar, de préférence inférieure à 600 cm³·100 µm/m²·j·bar et de manière particulièrement préférée inférieure à 560 cm³·100 µm/m²·j·bar.

18. Dispositif de fermeture d'un récipient selon l'une quelconque des revendications précédentes, **caractérisé en ce que** la garniture d'étanchéité présente un indice de fluidité à chaud (melt flow rate, MFR) à une charge de 5 kg et 190 °C d'au moins 1 g/10 minutes, de préférence d'au moins 5 g/10 minutes, de manière davantage préférée d'au moins 10 g/10 minutes, et de manière particulièrement préférée d'au moins 15 g/10 minutes.

19. Dispositif de fermeture d'un récipient selon l'une quelconque des revendications précédentes, **caractérisé en ce que** la garniture d'étanchéité présente une déformation rémanente après compression (DVR) à 25 % de compression, 23 °C et 22 h de stockage comprise entre 20 % et 70 %, notamment entre 40 % et 65 %.

20. Dispositif de fermeture d'un récipient selon l'une quelconque des revendications précédentes, **caractérisé en ce que** la garniture d'étanchéité présente une DVR à 25 % de compression, 40 °C et 22 h de stockage comprise entre 45 % et 70 %.

21. Dispositif de fermeture d'un récipient selon l'une quelconque des revendications précédentes, **caractérisé en ce que** la garniture d'étanchéité présente une DVR à 25 % de compression, 70 °C et 22 h de stockage comprise entre 50 % et 80 %.

22. Dispositif de fermeture d'un récipient selon l'une quelconque des revendications précédentes, **caractérisé en ce que** la garniture d'étanchéité présente une perméabilité à l'oxygène inférieure à 700 cm³·100 µm/m²·j·bar à une DVR (23 °C, 22 h de stockage, 25 % de compression) comprise entre 40 % et 65 %, et de préférence un indice de fluidité à chaud supérieur à 1 g/10 minutes, notamment supérieur à 5 g/10 minutes, de manière particulièrement préférée supérieur à 10 g/10 minutes, à une charge de 5 kg et 190 °C.

23. Dispositif de fermeture d'un récipient selon la revendication 22, **caractérisé en ce que** la garniture d'étanchéité contient du caoutchouc de butyle, du SIBS et au moins une polyoléfine, de préférence dans les plages de teneur selon la revendication 11.

24. Dispositif de fermeture d'un récipient selon l'une quelconque des revendications précédentes, **caractérisé en ce que** le dispositif de fermeture d'un récipient est un bouchon à vis, notamment un bouchon à vis en aluminium d'un diamètre de 28 mm, 30 mm ou 38 mm, ou un dispositif de fermeture à déchirer en aluminium ou une couronne, notamment d'une épaisseur de tôle inférieure à 0,21 mm.

25. Dispositif de fermeture d'un récipient selon l'une quelconque des revendications précédentes, **caractérisé en ce que** la garniture d'étanchéité peut être pasteurisée, notamment à des températures dans la plage allant de 62 °C à 70 °C.

26. Dispositif de fermeture d'un récipient selon l'une quelconque des revendications précédentes, **caractérisé en ce que** la garniture d'étanchéité est configurée sous la forme d'un anneau ou d'un disque, et comprend une lèvre d'étanchéité circonférentielle, dépassant dans la direction de l'orifice du récipient à l'état monté du dispositif de fermeture d'un récipient.

27. Dispositif de fermeture d'un récipient selon l'une quelconque des revendications précédentes, **caractérisé en ce que** la garniture d'étanchéité est formée par deux éléments différents, dont un est un premier élément annulaire ou (de préférence) en forme de disque, qui est de préférence relié avec le matériau métallique ou en matière plastique du corps du dispositif de fermeture, et l'autre est un deuxième élément (de préférence) annulaire ou en forme de disque, qui est agencé sur le premier élément au moins dans la zone où le dispositif de fermeture d'un récipient monté est en contact avec l'orifice du récipient.

28. Dispositif de fermeture d'un récipient selon la revendication 27, **caractérisé en ce que** le premier et le deuxième élément sont constitués par des matériaux différents, et le matériau du deuxième élément comprend au moins un polymère formant une barrière, de préférence au moins deux polymères formant une barrière.

29. Dispositif de fermeture d'un récipient selon l'une quelconque des revendications 1 à 26, **caractérisé en ce que** la garniture d'étanchéité est formée par deux matériaux différents, parmi lesquels le premier matériau forme un élément en forme de disque, qui se situe en sandwich entre des couches du deuxième matériau, le deuxième matériau étant un composé comprenant au moins un polymère formant une barrière et présentant une dureté Shore D inférieure à 40, et le premier matériau étant un composé ou un polymère pur présentant une dureté supérieure à Shore D 40.

30. Dispositif de fermeture d'un récipient selon la revendication 29, **caractérisé en ce que** le premier matériau comprend un polymère formant une barrière, qui est de préférence choisi parmi le copolymère d'éthylène-alcool vinylique (EVOH) et le polyamide (PA) (éventuellement modifié).

31. Dispositif de fermeture d'un récipient selon l'une quelconque des revendications précédentes, **caractérisé en ce que** la garniture d'étanchéité contient un composé qui lie l'oxygène (« scavenger »), notamment le sulfite de sodium.

32. Dispositif de fermeture d'un récipient selon l'une quelconque des revendications précédentes, comprenant une garniture d'étanchéité qui est munie, notamment revêtue, d'un film métallique.

33. Dispositif de fermeture d'un récipient selon l'une quelconque des revendications précédentes, comprenant une garniture d'étanchéité qui comprend un composé de polymère moussé.

34. Composé de polymère, qui ne contient aucun matériau halogéné et qui comprend au moins deux polymères différents, dont au moins un est un polymère formant une barrière ayant une dureté Shore D d'au plus 40 et une perméabilité à l'oxygène d'au plus 1 000 cm³·100 µm/m²·j·bar, ou, sans limitation de la dureté Shore D, ayant une perméabilité à l'oxygène d'au plus 10 cm³·100 µm/m²·j·bar,
la perméabilité à l'oxygène étant déterminée selon la norme DIN 53380-3 à une concentration en oxygène de 100 %, 100 % d'humidité relative de l'air, sous pression atmosphérique et à une température de mesure de 26 °C, et étant fondée sur une épaisseur de couche de 100 µm,
**caractérisé en ce que** le composé de polymère comprend au moins deux polymères formant une barrière différents.

35. Composé de polymère selon la revendication 34, **caractérisé en ce que** le composé de polymère comprend au moins deux polymères de barrière, qui diffèrent au niveau d'au moins un paramètre physique.

36. Composé de polymère selon la revendication 34 ou 35, **caractérisé en ce que** les polymères formant une barrière appartiennent à différentes classes de matière.

37. Composé de polymère selon l'une quelconque des revendications précédentes, **caractérisé en ce qu'**au moins un, de préférence au moins deux, des polymères formant une barrière sont des élastomères thermoplastiques.

38. Composé de polymère selon l'une quelconque des revendications précédentes, **caractérisé en ce qu'**au moins un, de préférence au moins deux, des polymères formant une barrière sont choisis dans le groupe qui comprend le caoutchouc de butyle (IIR) ; le polyisobutylène (PIB) ; les copolymères séquencés de styrène, notamment le styrène-isobutylène-styrène (SIBS), le styrène-isoprène-styrène (SIS), le styrène-vinylisoprène-styrène et le styrène-vinylisoprène-(co)isoprène-styrène hydrogéné ; le polyamide (PA) ; les copolymères d'éthylène-alcool vinylique (EVOH) ; et les vulcanisats thermoplastiques (TPE-V), notamment ceux ayant une teneur en isobutène > 50 % dans le composant caoutchouc,
la teneur totale en polymères à base d'isobutylène dans la garniture d'étanchéité ne dépassant de préférence pas 60 % en poids, de manière davantage préférée 55 % en poids et de manière particulièrement préférée 50 % en poids.

39. Composé de polymère selon l'une quelconque des revendications précédentes, **caractérisé en ce que** le composé de polymère comprend au moins un polymère supplémentaire qui n'est pas un polymère de barrière.

40. Composé de polymère selon la revendication 39, **caractérisé en ce que** le polymère supplémentaire est une polyoléfine, notamment un polyéthylène et/ou un copolymère de polyéthylène, de préférence le PE-HD, le PE-LD, le PE-LLD, (C₄, C₆ ou C₈) et/ou le VLDPE, le MD-LDPE, l'EVA, l'EEA, l'EMA, l'EAA, l'EBA, le polypropylène et/ou un copolymère de propylène.

41. Composé de polymère selon l'une quelconque des revendications précédentes, **caractérisé en ce que** le composé de polymère est un TPE, notamment le SBS, le SEBS, le SIBS, le SIS, le SEP, le SEPS, le SEEPS.

42. Composé de polymère selon l'une quelconque des revendications précédentes, **caractérisé en ce que** le composé de polymère contient du caoutchouc de butyle (IIR) et du styrène-isobutylène-styrène (SIBS) et de préférence une polyoléfine, ainsi qu'éventuellement un plastifiant, un agent de réduction de l'adhésivité (« anti-blocking agent ») et/ou un lubrifiant.

43. Composé de polymère selon l'une quelconque des revendications précédentes, **caractérisé en ce que** le composé de polymère contient jusqu'à 25 % en poids de caoutchouc de butyle (IIR), jusqu'à 65 % en poids de styrène-isobutylène-styrène (SIBS) et de préférence jusqu'à 60 % en poids, de manière davantage préférée jusqu'à 55 % en poids et de manière particulièrement préférée jusqu'à 50 % en poids de polyoléfine, notamment de PE-HD, PE-LD et/ou PE-LLD.

44. Composé de polymère selon l'une quelconque des revendications précédentes, **caractérisé en ce que** la teneur totale en polymères formant une barrière dans le composé de polymère ne dépasse pas 60 % en poids, de préférence 55 % en poids et de manière particulièrement préférée 50 % en poids.

45. Composé de polymère selon l'une quelconque des revendications précédentes, **caractérisé en ce que** le composé de polymère présente un indice de fluidité à chaud (melt flow rate, MFR) à une charge de 5 kg et 190 °C supérieur à 5 g/10 minutes, de préférence supérieur à 15 g/10 minutes, de manière particulièrement préférée d'au moins 20 g/10 minutes ; une dureté Shore D inférieure à 50, de préférence inférieure à 40 et de manière particulièrement préférée inférieure à 30 ; une perméabilité à l'oxygène inférieure à 940 cm³·100 µm/m²·j·bar, notamment inférieure à 850 cm³·100 µm/m²·j·bar, de manière davantage préférée inférieure à 800 cm³·100 µm/m²·j·bar, de manière encore davantage préférée inférieure à 770 cm³·100 µm/m²·j·bar, plus spécialement inférieure à 670 cm³·100 µm/m²·j·bar, encore plus spécialement inférieure à 630 cm³·100 µm/m²·j·bar, mieux inférieure à 600 cm³·100 µm/m²·j·bar et de manière préférée entre toutes inférieure à 560 cm³·100 µm/m²·j·bar ; et/ou une DVR à 25 % de compression, 23 °C et 22 h de stockage comprise entre 30 % et 70 %, de préférence entre 40 % et 65 %.

46. Composé de polymère selon la revendication 42, **caractérisé en ce que** le composé de polymère présente, à une DVR (25 % de compression, 23 °C, 22 h de stockage) comprise entre 40 % et 65 %, une perméabilité à l'oxygène inférieure à 700 cm³·100 µm/m²·j·bar et un indice de fluidité à chaud (melt flow rate MFR) à une charge de 5 kg à 190 °C supérieur à 1 g/10 minutes, notamment supérieur à 5 g/10 minutes et spécialement supérieur à 10 g/10 minutes.

47. Composé de polymère selon l'une quelconque des revendications précédentes, comprenant au moins un polymère formant une barrière ayant une perméabilité à l'oxygène d'au plus 900 cm³·100 µm/m²·j·bar, de manière davantage préférée d'au plus 800 cm³·100 µm/m²·j·bar, de manière plus spécialement préférée d'au plus 700 cm³·100 µm/m²·j·bar, et de manière encore davantage préférée d'au plus 600 cm³·100 µm/m²·j·bar, lorsque la dureté Shore D du polymère formant une barrière n'est pas supérieure à 40 ou, à une dureté Shore D quelconque, ayant une perméabilité à l'oxygène d'au plus 8 cm³·100 µm/m²·j·bar, de manière encore davantage préférée d'au plus 6 cm³·100 µm/m²·j·bar.

48. Utilisation d'un dispositif de fermeture d'un récipient selon l'une quelconque des revendications 1 à 30 pour la fermeture d'une bouteille de vin, de vin mousseux, de bière, de boisson gazeuse, de spiritueux ou de champagne.

49. Utilisation d'un composé de polymère selon l'une quelconque des revendications 34 à 47, qui comprend au moins un polymère formant une barrière, en tant que garniture d'étanchéité dans un dispositif de fermeture, notamment un bouchon à vis et spécialement un bouchon à vis en aluminium d'un diamètre de 28 mm, 30 mm ou 38 mm, ou dans une couronne d'une épaisseur de tôle inférieure à 0,21 mm, de préférence inférieure à 0,20 mm et de manière particulièrement préférée inférieure à 0,18 mm, pour une bouteille de vin, de vin mousseux, de bière, de boisson gazeuse, de spiritueux ou de champagne.

50. Utilisation selon la revendication 49, **caractérisée en ce que** le composé de polymère comprend un polymère formant une barrière, notamment le caoutchouc de butyle (IIR) ou le styrène-isobutylène-styrène (SIBS), ainsi qu'au moins une polyoléfine, notamment le PE-HD.

51. Utilisation selon la revendication 49 ou 50, **caractérisée en ce que** la garniture d'étanchéité présente une dureté Shore D comprise entre 15 et 45, et une perméabilité à l'oxygène inférieure à 1 000 cm³·100 µm/m²·j·bar, notamment inférieure à 600 cm³·100 µm/m²·j·bar et plus spécialement inférieure à 500 cm³·100 µm/m²·j·bar.

52. Utilisation selon l'une quelconque des revendications 32 à 34, **caractérisée en ce que** la garniture d'étanchéité présente un indice de fluidité à chaud (melt flow rate, MFR, à une charge de 5 kg et 190 °C) d'au moins 10 g/10 minutes, de préférence d'au moins 15 g/10 minutes.

53. Garniture d'étanchéité pour un dispositif de fermeture d'un récipient selon l'une quelconque des revendications 1 à 33, sous la forme d'un disque préfabriqué destiné à être inséré dans le dispositif de fermeture d'un récipient.

54. Garniture d'étanchéité selon la revendication 53, sous la forme d'une partie moulée par injection.
